# EUROPEAN PATENT APPLICATION

(11) **EP 4 834 810 A1**
(43) Date of publication of application: **04.11.2026**
(21) Application number: 26175860.1
(22) Date of filing: 30.04.2026
(51) Int. Cl.: B65H 1/04, B65H 1/26, G03B 17/52

(54) **EXPOSURE DEVICE AND CARTRIDGE**

(30) Priority: 30.04.2025 JP 2025075631; 26.02.2026 JP 2026030156
(71) Applicant: FUJIFILM Corporation, Tokyo 106-8620 (JP)
(72) Inventor: ABE, Takuro, Saitama, 331-9624 (JP); TAKAHASHI, Satoshi, Saitama, 331-9624 (JP); SHIBASAKI, Motomu, Saitama, 331-9624 (JP); IKEDA, Hitoshi, Saitama, 331-9624 (JP); NARITOMI, Daichi, Saitama, 331-9624 (JP)
(74) Representative: Parker, Andrew James

(57) **Abstract**

Provided are an exposure device (200) and a cartridge (100) capable of reducing a size of an apparatus. An exposure device includes an accommodation portion (220) in which sheet-like recording media (10) each having an exposure surface (10a) on one side are accommodated in a stacked manner with orientations of the exposure surfaces aligned, a pressing portion (230) that presses the recording media accommodated in the accommodation portion in a stacking direction from an exposure surface side, a feeding section (240) that feeds the recording medium positioned at a leading end in a pressing direction of the pressing portion from the accommodation portion, a transport section (250) that transports the recording medium fed from the accommodation portion, and an exposure section (280) that is provided between the accommodation portion and the transport section and exposes the exposure surface of the recording medium fed from the accommodation portion by irradiating the exposure surface with light.

## Description

### BACKGROUND OF THE INVENTION

### 1. Field of the Invention

The present disclosure relates to an exposure device and a cartridge, and particularly to an exposure device that records an image on sheet-like recording media each having an exposure surface on one side, and a cartridge that accommodates sheet-like recording media each having an exposure surface on one side.

### 2. Description of the Related Art

A printer (instant printer) that uses an instant film as a recording medium is known. In this type of printer, an instant film is exposed using an exposure head, and an image is recorded on the instant film.

JP2001-330898A discloses a printer having a configuration in which an instant film is transported in a curved state and exposed by an exposure head during the transport.

JP1999-194429A (JP-H11-194429A) discloses a printer that uses a film pack (a film pack in which a plurality of instant films are accommodated in a stacked manner in a storage body), and discloses that an exposure head is disposed to be within a range of a thickness of the film pack.

JP2000-343758A discloses that, in a printer having a configuration in which an instant film is transported by a rotating roller, a rotation amount of the roller is detected by an encoder, and a speed of the instant film is detected.

### SUMMARY OF THE INVENTION

One embodiment according to the disclosed technology provides an exposure device and a cartridge capable of reducing a size of an apparatus.
[1] An exposure device comprising: an accommodation portion in which sheet-like recording media each having an exposure surface on one side are accommodated in a stacked manner with orientations of the exposure surfaces aligned; a pressing portion that presses the recording media accommodated in the accommodation portion in a stacking direction from an exposure surface side; a feeding section that feeds the recording medium positioned at a leading end in a pressing direction of the pressing portion from the accommodation portion; a transport section that transports the recording medium fed from the accommodation portion; and an exposure section that is provided between the accommodation portion and the transport section and exposes the exposure surface of the recording medium fed from the accommodation portion by irradiating the exposure surface with light.
[2] The exposure device according to [1], in which the pressing portion includes a first pressing portion and a second pressing portion in order from a downstream side toward an upstream side in a feeding direction of the recording media, the first pressing portion presses the recording media with a first pressing force, and the second pressing portion presses the recording media with a second pressing force different from the first pressing force.
[3] The exposure device according to [2], in which the second pressing portion presses the recording media with the second pressing force smaller than the first pressing force.
[4] The exposure device according to any one of [1] to [3], in which the recording media are accommodated in a cartridge, and the cartridge is accommodated in the accommodation portion.
[5] The exposure device according to [4], in which the cartridge includes a case that accommodates the recording media and has a first opening on a surface facing the exposure surface of the recording media, and a sheet-like light shielding member that is provided in the case, covers the first opening from an inside of the case, and has a protrusion to be inserted into the first opening, and the pressing portion includes a pressing member that is inserted into the first opening of the cartridge accommodated in the accommodation portion and presses the light shielding member.
[6] The exposure device according to [5], in which the light shielding member includes a sheet-like first light shielding member that is elastically deformable, a part of the first light shielding member being bonded to the cartridge, and the first light shielding member being disposed in the case to cover the first opening, and a sheet-like second light shielding member, a part of the second light shielding member being bonded to the first light shielding member, and the second light shielding member being disposed to overlap the first light shielding member to support the recording media.
[7] The exposure device according to [5] or [6], in which the feeding section includes an engaging member that moves in a feeding direction of the recording media, engages the engaging member with the recording medium at the leading end in the feeding direction, and feeds the recording medium from the accommodation portion, the cartridge has a second opening into which the engaging member is inserted, in the case, and the light shielding member has a first recess that is recessed in a thickness direction corresponding to a position of the second opening, and engagement with the engaging member is avoided through the first recess.
[8] The exposure device according to any one of [5] to [7], in which the light shielding member has an outer shape corresponding to an internal shape of the case and has a hole-free shape.
[9] The exposure device according to any one of [1] to [8], further comprising: a detection section that detects a speed of the recording medium transported by the transport section, in which the transport section includes a roller that rotates to feed the recording medium, and a gear train that transmits power to the roller, and the detection section includes a reflective member provided on one of gears constituting the gear train, a light projecting part that projects light onto the reflective member, and a light receiving part that receives the light projected from the light projecting part and reflected by the reflective member.
[10] The exposure device according to [9], in which the reflective member is provided on the gear mounted on a shaft of the roller.
[11] The exposure device according to [10], in which the reflective member is provided on a side surface of the gear on a roller side.
[12] The exposure device according to [11], in which the gear has a second recess in the side surface, and the reflective member is disposed in the second recess.
[13] The exposure device according to any one of [1] to [12], in which the exposure section includes a light source part disposed to face the exposure surface of the recording medium fed from the accommodation portion, and an optical system that focuses light emitted from the light source part on the exposure surface.
[14] The exposure device according to any one of [1] to [12], in which the exposure section includes a light source part, and an optical system that includes a reflective optical element and bends light emitted from the light source part to focus the light on the exposure surface.
[15] An exposure device comprising: an accommodation portion in which sheet-like recording media each having an exposure surface on one side are accommodated in a stacked manner with orientations of the exposure surfaces aligned; a pressing portion that presses the recording media accommodated in the accommodation portion in a stacking direction; a feeding section that feeds the recording medium positioned at a leading end in a pressing direction of the pressing portion from the accommodation portion; a transport section that transports the recording medium fed from the accommodation portion; an exposure section that exposes the exposure surface of the recording medium fed from the accommodation portion by irradiating the exposure surface with light; and a detection section that detects a speed of the recording medium transported by the transport section, in which the transport section includes a roller that rotates to feed the recording medium, and a gear train that transmits power to the roller, and the detection section includes a reflective member provided on one of gears constituting the gear train, a light projecting part that projects light onto the reflective member, and a light receiving part that receives the light projected from the light projecting part and reflected by the reflective member.
[16] The exposure device according to [15], in which the reflective member is provided on the gear mounted on a shaft of the roller.
[17] The exposure device according to [15] or [16], in which the reflective member is provided on a side surface of the gear on a roller side.
[18] The exposure device according to [17], in which the gear has a second recess in the side surface, and the reflective member is disposed in the second recess.
[19] A cartridge in which sheet-like recording media each having an exposure surface on one side are accommodated in a stacked manner with orientations of the exposure surfaces aligned, the cartridge comprising: a case that accommodates the recording media and has a first opening on a surface facing the exposure surface of the recording media; and a sheet-like light shielding member that is provided in the case, covers the first opening from an inside of the case, and has a protrusion to be inserted into the first opening, in which the recording media in the case are pressable from an exposure surface side in a stacking direction through the light shielding member from the first opening.
[20] The cartridge according to [19], in which the light shielding member includes a sheet-like first light shielding member that is elastically deformable, a part of the first light shielding member being bonded to the cartridge, and the first light shielding member being disposed in the case to cover the first opening, and a sheet-like second light shielding member, a part of the second light shielding member being bonded to the first light shielding member, and the second light shielding member being disposed to overlap the first light shielding member to support the recording media.
[21] The cartridge according to [19] or [20], in which the recording medium in the case is discharged from the case by engaging an engaging member that moves in a discharge direction with the recording medium, the case has a second opening into which the engaging member is inserted, and the light shielding member has a first recess recessed in a thickness direction corresponding to a position of the second opening, and engagement with the engaging member is avoided through the first recess.
[22] The cartridge according to any one of [19] to [21], in which the light shielding member has an outer shape corresponding to an internal shape of the case and has a hole-free shape.

### BRIEF DESCRIPTION OF THE DRAWINGS

FIG. 1 is a front perspective view of a printer.
FIG. 2 is a rear perspective view of the printer.
FIG. 3 is a perspective view showing a loading method of a cartridge.
FIG. 4 is a front view of an instant film.
FIG. 5 is a rear view of the instant film.
FIG. 6 is a front perspective view of the cartridge.
FIG. 7 is a rear perspective view of the cartridge.
FIG. 8 is an exploded perspective view of the cartridge.
FIG. 9 is an exploded perspective view of a case.
FIG. 10 is an exploded perspective view of the case.
FIG. 11 is a front perspective view of a light shielding plate.
FIG. 12 is a rear perspective view of the light shielding plate.
FIG. 13 is an exploded perspective view of the light shielding plate including a cover of the case.
FIG. 14 is a cross-sectional view of the cartridge.
FIG. 15 is an enlarged view of a part of FIG. 14 (a region surrounded by a circle indicated by a broken line).
FIG. 16 is a cross-sectional view of the cartridge at the time of pressing.
FIG. 17 is a conceptual diagram of discharge of the instant film by a claw.
FIG. 18 is an explanatory diagram of a discharge operation of the instant film by the claw.
FIG. 19 is an explanatory diagram of the discharge operation of the instant film by the claw.
FIG. 20 is a front perspective view of a cover sheet.
FIG. 21 is a rear perspective view of the cover sheet.
FIG. 22 is a front view of the cover sheet.
FIG. 23 is a rear view of the cover sheet.
FIG. 24 is a top view of the cover sheet.
FIG. 25 is a schematic configuration diagram of an inside of the printer.
FIG. 26 is a perspective view of a pressing unit.
FIG. 27 is an exploded perspective view of the pressing unit.
FIG. 28 is a perspective view showing a schematic configuration of a film transport section.
FIG. 29 is a perspective view showing the schematic configuration of the film transport section.
FIG. 30 is a perspective view of a capstan roller including a rotation amount detection section.
FIG. 31 is a perspective view showing a configuration of the rotation amount detection section.
FIG. 32 is a schematic configuration diagram of an exposure section.
FIG. 33 is a block diagram showing an electric configuration of the printer.
FIGS. 34A and 34B are diagrams showing a comparison between an exposure section adopting a linear optical system and an exposure section adopting a bending optical system.
FIG. 35 is a view showing another example of a film discharge port provided in the cartridge.
FIG. 36 is a view showing an example of a form of disposition of the cover sheet.
FIG. 37 is an enlarged view of a main part in FIG. 36.
FIG. 38 is a front perspective view showing a preferred example of the cover sheet.
FIG. 39 is a rear perspective view showing the preferred example of the cover sheet.
FIG. 40 is a front view showing the preferred example of the cover sheet.
FIG. 41 is a rear view showing the preferred example of the cover sheet.
FIG. 42 is a view showing an example of the cover sheet having chamfered edge portions.
FIG. 43 is a view showing other examples of protrusions and recesses provided at a case main body and the cover.
FIG. 44 is an enlarged view of parts (a protrusion and a recess) of FIG. 43.
FIG. 45 is a view showing another example of a shape of a protrusion.
FIG. 46 is a view showing an example of smoothing to be performed on an inner surface of the case main body.

### DESCRIPTION OF THE PREFERRED EMBODIMENTS

Hereinafter, preferred embodiments of the present invention will be described in detail with reference to the accompanying drawings.

Here, a case where the present invention is applied to a printer (instant printer) that uses an instant film as a recording medium will be described as an example. The printer is an example of an exposure device.

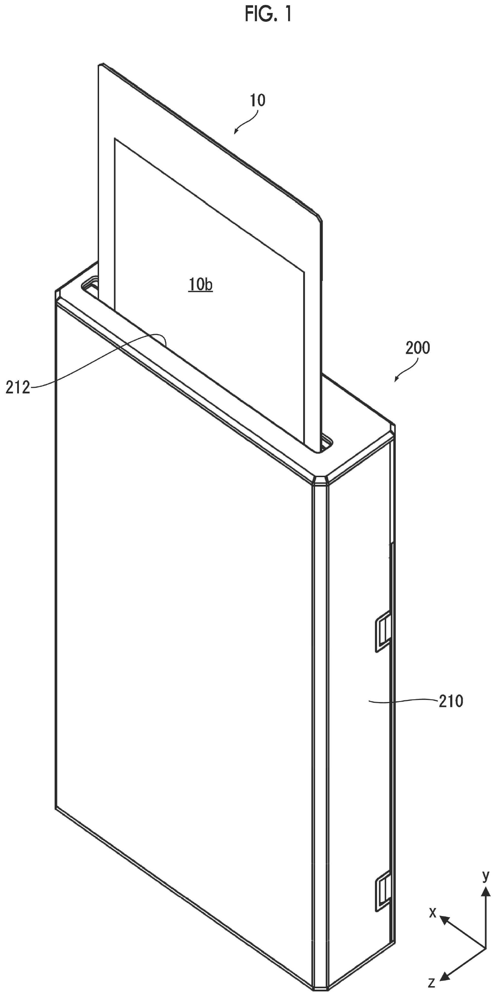

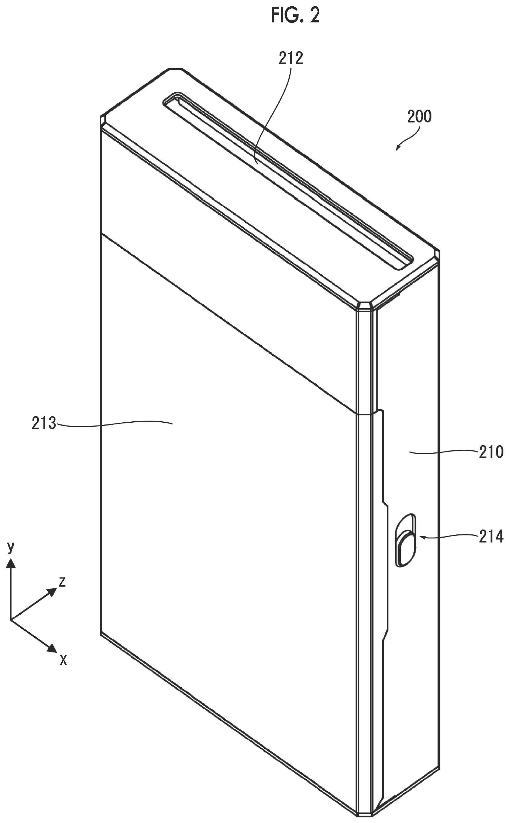

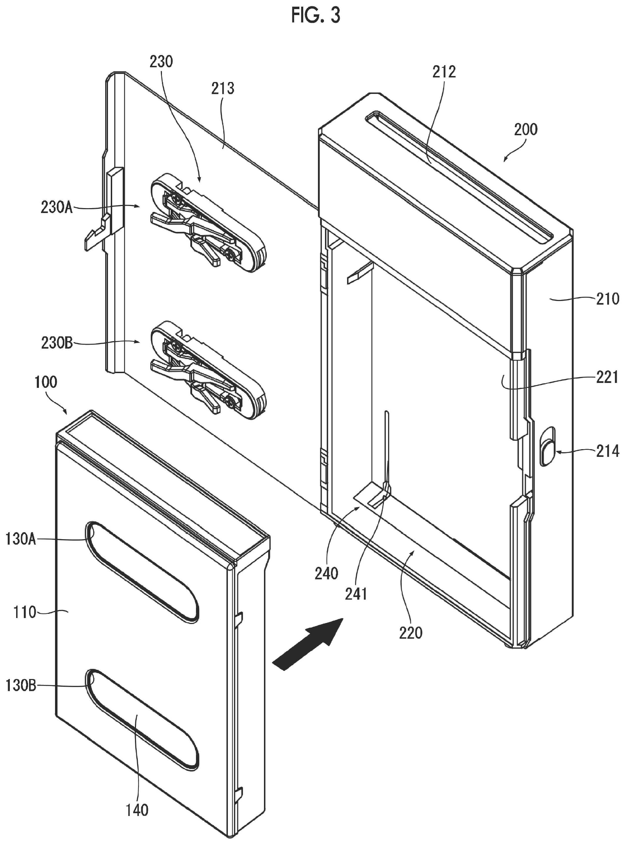

FIG. 1 is a front perspective view of the printer. FIG. 2 is a rear perspective view of the printer. FIG. 3 is a perspective view showing a loading method of a cartridge. In FIGS. 1 and 2, an x-axis, a y-axis, and a z-axis are three axes orthogonal to each other. A direction of the z-axis is a front-rear direction of a printer 200, a direction of the x-axis is a left-right direction of the printer 200, and a direction of the y-axis is an up-down direction of the printer 200. The left-right direction is synonymous with a lateral direction. In addition, the up-down direction is synonymous with a height direction.

The printer 200 of the present embodiment is a so-called mobile printer (portable printer that can be carried) and is mainly connected to a camera-equipped portable terminal such as a smartphone to be used for printing a captured image. The printer 200 is connected to the terminal in a wireless manner. For the communication, for example, short range wireless communication such as Bluetooth (registered trademark) and Wi-Fi (registered trademark) is adopted.

As described above, the instant film is used as the recording medium. In the present embodiment, a cartridge 100 accommodating a plurality of sheets of instant films is loaded into the printer 200, and the instant film to be used for printing is set in the printer 200.

Therefore, first, the instant film 10 and the cartridge 100 used in the printer 200 of the present embodiment will be described.

### Instant Film

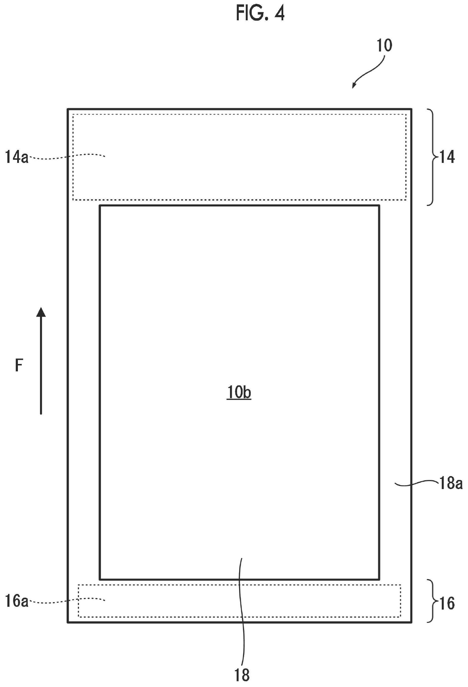

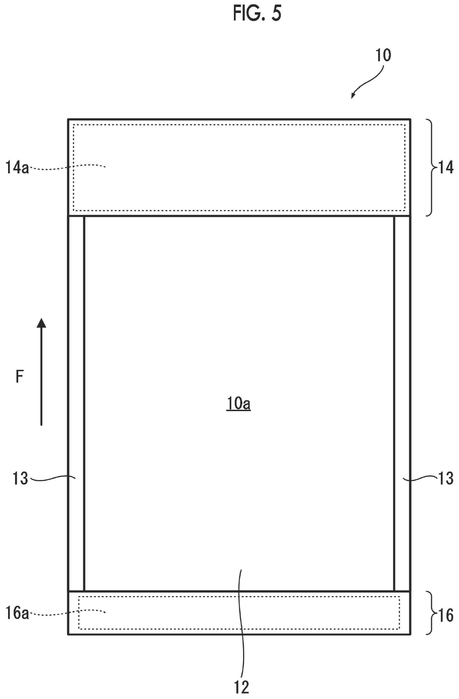

FIG. 4 is a front view of the instant film. FIG. 5 is a rear view of the instant film. In FIGS. 4 and 5, a direction indicated by an arrow F is an advance direction of the instant film 10. That is, the direction is a transport direction during printing. In addition, the direction is also a feeding direction (discharge direction) from the cartridge 100.

The instant film 10 shown in FIGS. 4 and 5 is a so-called "monosheet type" instant film (also referred to as a sheet film method, an integral film, or the like). The monosheet type instant film is an instant photographic film in which a plurality of functional layers (e.g., a photosensitive layer, a development treatment layer, and a base) required for photographing and development are stacked in a single sheet and which is capable of forming a visible image without external peeling operation. In the monosheet type instant film, an image appears on a back side of an exposure surface.

The instant film 10 has a rectangular card shape. A surface of the instant film 10 on one side is configured as an exposure surface 10a, and a surface of the instant film 10 on the other side is configured as an observation surface 10b. The exposure surface 10a is a surface on which an image is recorded by exposure, and the observation surface 10b is a surface on which the recorded image is observed. That is, a back surface (surface on an opposite side) of the exposure surface 10a is configured as the observation surface 10b.

As shown in FIG. 5, the exposure surface 10a comprises an exposure region 12, a side edge portion 13, a pod portion 14, and a trap portion 16.

The exposure region 12 is a region in which the image is recorded by exposure. The exposure region 12 is the printable region of the instant film 10. The side edge portions 13 are disposed on both left and right sides of the exposure region 12 with a predetermined width.

The pod portion 14 is disposed on a front side in an advance direction with respect to the exposure region 12 with a predetermined width. The pod portion 14 incorporates a development treatment liquid pod 14a containing the development treatment liquid.

The trap portion 16 is disposed on a rear side in the advance direction with respect to the exposure region 12 with a predetermined width. An absorbent material 16a is built in the trap portion 16. The width of the trap portion 16 is configured to be narrower than the width of the pod portion 14.

As shown in FIG. 4, the observation surface 10b of the instant film 10 comprises an observation region 18. The observation region 18 is a region in which the image is displayed. By performing development treatment on the exposure region 12, the image is displayed in the observation region 18. The observation region 18 is arranged in correspondence with the exposure region 12. A frame 18a is provided around the observation region 18. Accordingly, the image is displayed within the frame.

The instant film 10 is viewed in a direction in which the trap portion 16 having a narrow width in an up-down direction is on the upper side and the pod portion 14 having a wide width in the up-down direction is on the lower side. Therefore, the image is printed in a direction in which the trap portion 16 faces up and the pod portion 14 faces down.

After the exposure, the instant film 10 is subjected to the development treatment by spreading the development treatment liquid of the pod portion 14 in the exposure region 12. The development treatment liquid of the pod portion 14 is squeezed from the pod portion 14 and spread in the exposure region 12 by causing the instant film 10 to pass between a developing roller pair 252. The development treatment liquid that is left at a time of spreading processing is trapped in the trap portion 16.

The instant film 10 of the present embodiment is known as a film used for an instant camera (Instax (registered trademark), product name "Cheki") manufactured by FUJIFILM Corporation, and can be used. In the present embodiment, the instant film 10 is an example of a sheet-like recording medium.

### Cartridge

The cartridge 100 accommodates the plurality of instant films 10 in a stacked manner. The cartridge 100 accommodating the instant film 10 is also referred to as a film pack.

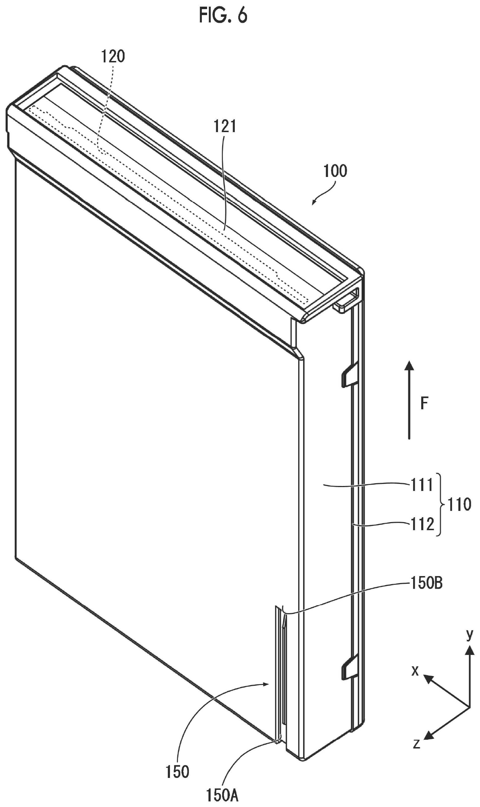

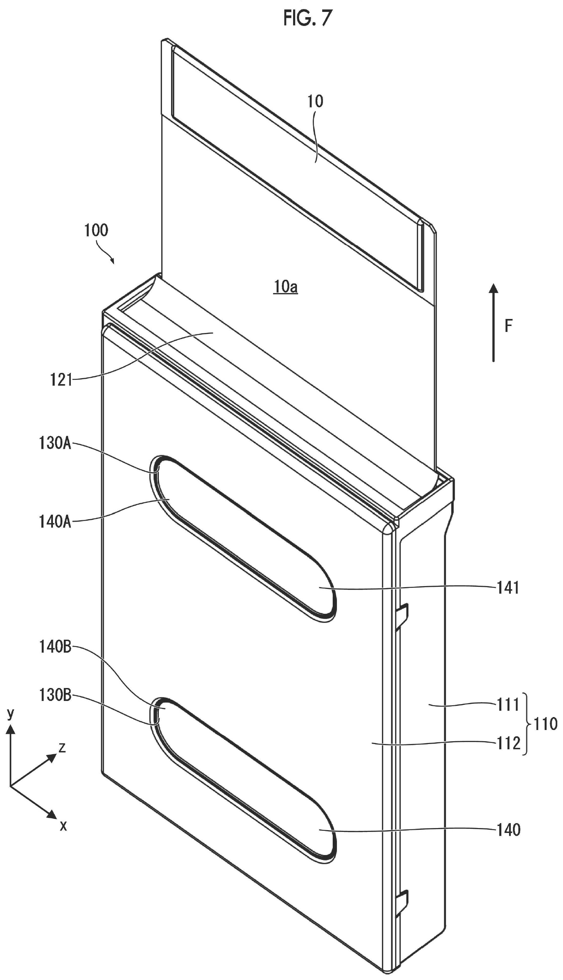

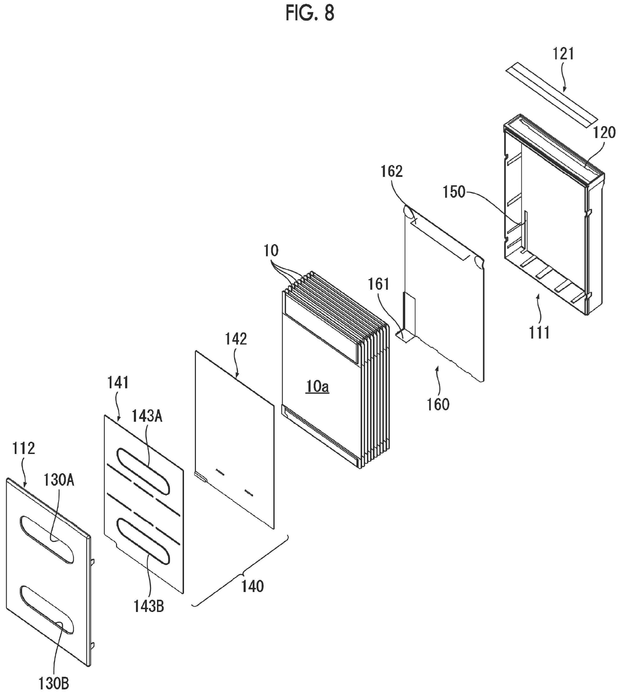

FIG. 6 is a front perspective view of the cartridge. FIG. 7 is a rear perspective view of the cartridge. FIG. 8 is an exploded perspective view of the cartridge. In FIGS. 6 and 7, an x-axis, a y-axis, and a z-axis are three axes orthogonal to each other. A direction of the z-axis is a front-rear direction of the cartridge 100, a direction of the x-axis is a left-right direction of the cartridge 100, and a direction of the y-axis is an up-down direction of the cartridge 100. The left-right direction is synonymous with a lateral direction. In addition, the up-down direction is synonymous with a height direction. In addition, in FIGS. 6 and 7, a direction indicated by an arrow F is a discharge direction (the advance direction) of the instant film 10. In the present embodiment, the discharge direction of the instant film 10 is a direction along the up-down direction of the cartridge 100.

The cartridge 100 comprises a case 110 that constitutes a main body of the cartridge 100. The case 110 is composed of a case main body 111 and a cover 112, and has a flat rectangular box shape as a whole.

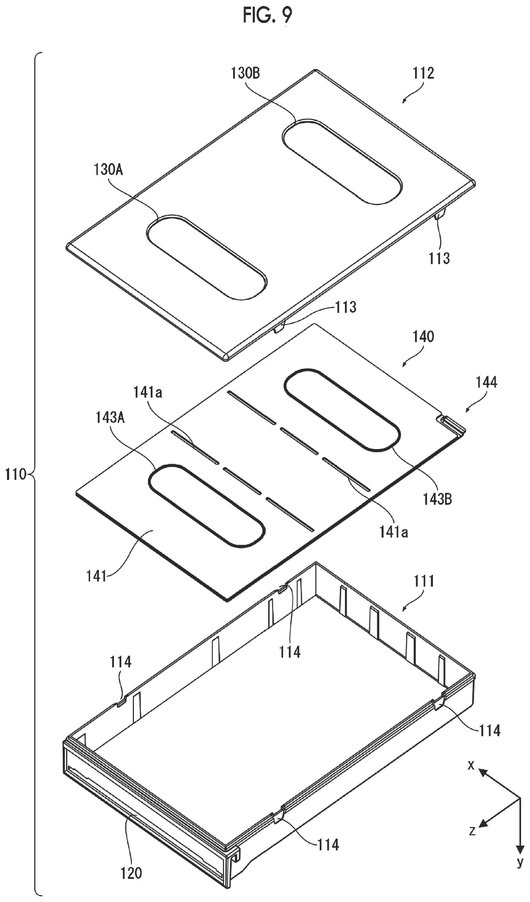

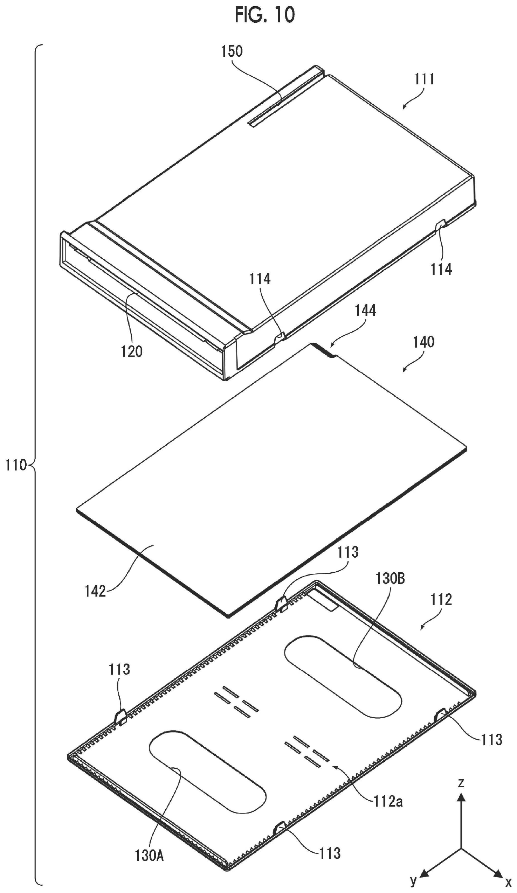

FIGS. 9 and 10 are exploded perspective views of the case. FIG. 9 is an exploded perspective view of the case 110 as viewed from the rear surface side, and FIG. 10 is an exploded perspective view of the case 110 as viewed from the front surface side.

The case main body 111 is a container portion of the case 110 and has a rectangular box shape with a rear surface side opened. As an example, the case main body 111 is composed of a resin having light shielding properties.

The cover 112 is a lid portion of the case 110 and has a rectangular plate shape corresponding to a shape of the rear surface of the case main body 111. As an example, the cover 112 is composed of a resin having light shielding properties.

After the instant film 10 is accommodated in the case main body 111, the cover 112 is attached to the rear surface of the case main body 111 to close an opening of the rear surface of the case main body 111.

The cover 112 is provided with protrusions 113 in the shape of a thin plate piece at predetermined positions of an outer peripheral portion, and the protrusions 113 protrude toward the case main body 111. The case main body 111 is provided with recesses 114 at predetermined positions (positions corresponding to the protrusions 113) of an outer peripheral portion, and the protrusions 113 provided at the cover 112 are to fit in the recesses 114. The protrusions 113 and the recesses 114 have a function of preventing misassembly. That is, the protrusions 113 and the recesses 114 have a function of preventing the cover 112 from being attached to the case main body 111 upside down or from being attached with the front side back. For this reason, the protrusions 113 and the recesses 114 are disposed with such a positional relationship that the cover 112 cannot be physically attached to the case main body 111 upside down or with the front side back. As an example, in the present embodiment, the protrusions 113 and the recesses 114 are disposed at two locations on each of the left and right sides (four locations in total) of the cover 112 and at two locations on each of the left and right sides (four locations in total) of the case main body 111, respectively, and layout of the protrusions 113 and the recesses 114 that are to be disposed on the sides are adjusted, thereby preventing misassembly. Specifically, the protrusions 113 and the recesses 114 are disposed such that the protrusions 113 or the recesses 114 are vertically asymmetric on each side to prevent misassembly. The vertically asymmetric disposition of the protrusions 113 or the recesses 114 on each side prevents the cover 112 from being physically attached upside down, thereby preventing misassembly.

The protrusions 113 and the recesses 114 also have a positioning function at the time of assembly. That is, when the cover 112 is attached to the case main body 111, the protrusions 113 provided on the cover 112 fit into the recesses 114 provided in the case main body 111, thereby accurately positioning and attaching the cover 112 to the case main body 111.

Further, the protrusions 113 and the recesses 114 function as a guide for assembly. That is, the protrusions 113 and the recesses 114 have a function of leading the cover 112 to be automatically attached to an appropriate position when the protrusions 113 are fit in the recesses 114. To implement the function, the protrusions 113 and the recesses 114 have a trapezoidal shape, i.e., a taper shape tapering down in an insertion direction (a direction in which the protrusions 113 protrude). This eliminates the need for precise positioning between the protrusions 113 and the recesses 114 during attachment, thereby facilitating assembly.

Note that any shape may be adopted for the protrusions 113 and the recesses 114 as long as the shape can implement the guidance function and that a shape other than a trapezoidal shape can be adopted. For example, a triangular shape or a semicircular shape may be adopted.

Although a case where the protrusions 113 and the recesses 114 are each provided at four locations on an outer periphery is described as an example in the present embodiment, the protrusions 113 and the recesses 114 each only need to be provided at at least one location.

The cover 112 assembled to the case main body 111 is integrated with the case main body 111 by adhesion or welding. As an example, in the present embodiment, the cover 112 is bonded to the case main body 111 by welding (for example, ultrasonic welding). The cover 112 integrated with the case main body 111 constitutes the rear surface of the case 110.

As shown in FIG. 8, a plurality of sheets (for example, 10 sheets) of the instant films 10 are stacked and accommodated in the case 110. Each instant film 10 is accommodated in the case 110 with the orientation of the exposure surface 10a aligned in one direction. In the present embodiment, all the instant films 10 in the case 110 are accommodated in the case 110 with the exposure surface 10a facing the rear surface side (cover 112 side) of the case 110. Therefore, in all the instant films 10 in the case 110, the observation surface 10b faces the front surface side (front side) of the case 110.

As shown in FIG. 6, an upper surface (top surface) of the case 110 is provided with a film discharge port 120 for discharging the instant film 10 accommodated in the case 110. The film discharge port 120 has a slit-like shape through which the instant film 10 can pass.

As will be described later, the cartridge 100 of the present embodiment has a configuration in which the instant film 10 in the case 110 is pressed from the rear surface side of the case 110. Therefore, the film discharge port 120 is disposed at a position close to the front surface (close to the front) of the case 110 on the upper surface of the case 110. More specifically, the film discharge port 120 is disposed at a position that enables the instant film 10 positioned at the uppermost position in the case 110 (the leading instant film 10) to pass directly through the film discharge port 120 when the instant film 10 is fed.

The film discharge port 120 is provided with a flap 121. The flap 121 is a member that covers the film discharge port 120 from the outside and shields the film discharge port 120 from light. The flap 121 is composed of an elastically deformable sheet material having light shielding properties. The instant film 10 is discharged from the film discharge port 120 by elastically deforming the flap 121. After the instant film 10 passes through, the flap 121 is restored to its original shape by elastic restoration and closes the film discharge port 120.

A pair of pressing openings 130A and 130B are provided on the rear surface of the case 110, as shown in FIG. 7. The pressing openings 130A and 130B are opening portions (holes) necessary for pressing the instant film 10 in the case 110 in the stacking direction. A pressing member is inserted into the case 110 through the pressing openings 130A and 130B, and the instant film 10 in the case 110 is pressed in the stacking direction. The pressing member is provided on the apparatus side using the cartridge 100. In the present embodiment, the pressing member is provided in the printer 200. The pressing member and the pressing mechanism provided in the printer 200 will be described later. The pressing openings 130A and 130B are examples of a first opening.

The pressing openings 130A and 130B are composed of long holes (holes having a shape in which a round hole is elongated horizontally) extending in the lateral direction (x-axis direction) of the case 110 on the rear surface of the case 110. In addition, the pressing openings 130A and 130B are disposed at predetermined intervals along the up-down direction of the case 110 (= the advance direction of the instant film 10).

Hereinafter, as necessary, the pressing opening 130A disposed on the upper side of the case 110 (= the downstream side in the advance direction of the instant film 10) will be referred to as a first pressing opening 130A, and the pressing opening 130B disposed on the lower side of the case 110 (= the upstream side in the advance direction of the instant film 10) will be referred to as a second pressing opening 130B to distinguish between the two.

As shown in FIGS. 9 and 10, a light shielding plate 140 is provided inside the case 110. The light shielding plate 140 covers the pressing openings 130A and 130B from the inside of the case 110 and shields the pressing openings 130A and 130B. The light shielding plate 140 is disposed between the rear surface (cover 112) of the case 110 and the instant film 10 in the case 110. That is, the instant film 10 in the case 110 is disposed to overlap the light shielding plate 140. Therefore, the instant film 10 in the case 110 has a configuration in which the instant film 10 is pressed via the light shielding plate 140. Therefore, the cartridge 100 is configured to be able to press the instant film 10 inside via the light shielding plate 140.

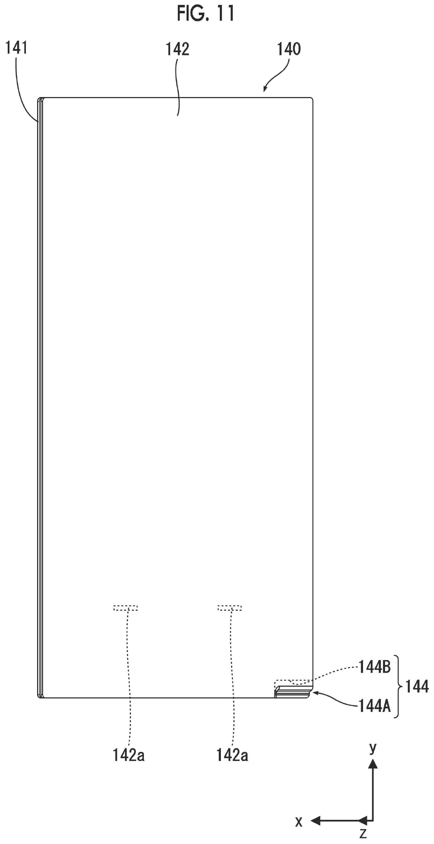

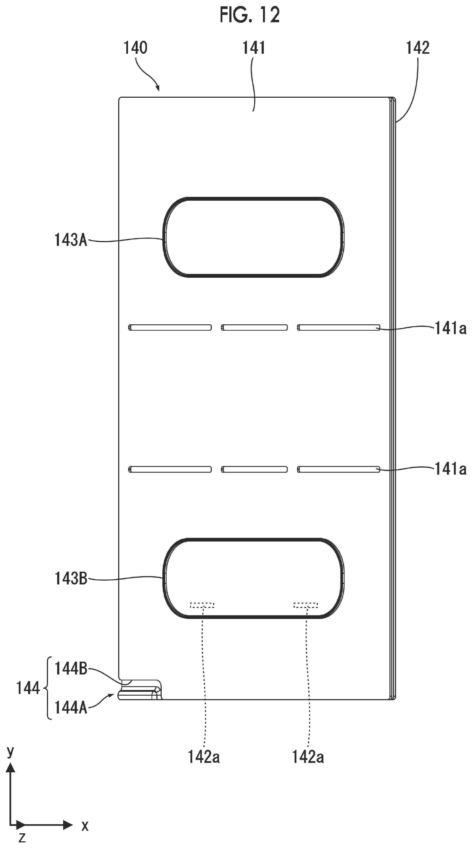

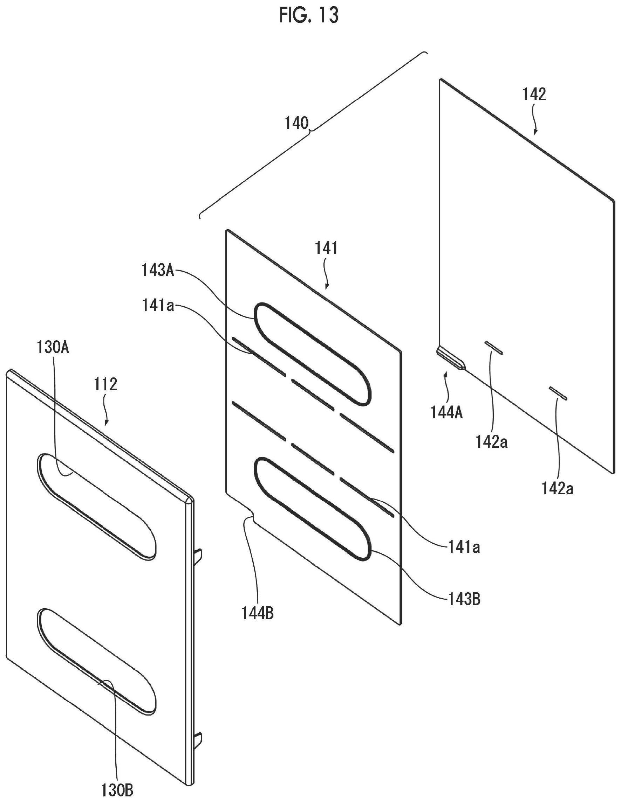

FIG. 11 is a front perspective view of the light shielding plate. FIG. 12 is a rear perspective view of the light shielding plate. FIG. 13 is an exploded perspective view of the light shielding plate including the cover of the case.

As shown in FIGS. 11 to 13, the light shielding plate 140 is configured by combining a first light shielding plate 141 and a second light shielding plate 142. The first light shielding plate 141 and the second light shielding plate 142 are overlapped to constitute one light shielding plate 140. In the present embodiment, the first light shielding plate 141 is disposed on the rear surface side (cover 112 side) of the case 110, the second light shielding plate 142 is disposed on the front surface side (instant film 10 side in the case 110) of the case 110, and one light shielding plate 140 is configured. The light shielding plate 140 is an example of a light shielding member. In addition, the first light shielding plate 141 is an example of a first light shielding member, and the second light shielding plate 142 is an example of a second light shielding member.

The light shielding plate 140 obtained by combining the first light shielding plate 141 and the second light shielding plate 142 has a rectangular sheet shape (thin plate shape) as a whole. In addition, the light shielding plate 140 has an outer shape (outline shape of outer periphery) corresponding to the internal shape of the case 110. Therefore, the light shielding plate 140 in a state of not being pressed is disposed in the case 110 in a state of having substantially no gap around the light shielding plate 140.

In addition, the light shielding plate 140 obtained by combining the first light shielding plate 141 and the second light shielding plate 142 has a shape having no opening (hole) in a plane. That is, the light shielding plate 140 has a hole-free shape. In this way, the light shielding plate 140 having a hole-free shape is disposed in the case 110, and the pressing openings 130A and 130B are covered from the inside, so that the pressing openings 130A and 130B are shielded. As a result, it is possible to effectively suppress the entry (leakage) of light from the pressing openings 130A and 130B.

Both the first light shielding plate 141 and the second light shielding plate 142 have a rectangular sheet shape (thin plate shape), and are partially bonded and integrated. As shown in FIG. 13, the second light shielding plate 142 is provided with a bonding portion 142a on a surface facing the first light shielding plate 141. The bonding portion 142a is composed of a linear protrusion extending in the lateral direction (x-axis direction), and is disposed in the vicinity of the end portion of the second light shielding plate 142 on the lower side (= upstream side in the advance direction of the instant film 10). The second light shielding plate 142 is bonded to the first light shielding plate 141 at the bonding portion 142a. The method of bonding is not particularly limited. For example, in the present embodiment, the first light shielding plate 141 and the second light shielding plate 142 are bonded by welding (for example, ultrasonic welding). Since the first light shielding plate 141 and the second light shielding plate 142 are bonded by welding, the first light shielding plate 141 and the second light shielding plate 142 are made of a resin (particularly, a resin having light shielding properties). In addition, a method such as adhesion or caulking can be adopted for the bonding. Note that although the bonding portion 142a is provided on the second light shielding plate 142 side in the present embodiment, the bonding portion 142a may be provided on the first light shielding plate 141 side. For example, the bonding portion 142a with the second light shielding plate 142 may be provided in the vicinity of the end portion of the first light shielding plate 141 on the lower side.

The light shielding plate 140 obtained by bonding and integrating the first light shielding plate 141 and the second light shielding plate 142 is further bonded to the inner surface of the cover 112 of the case 110 and is integrated with the cover 112.

As described above, in the light shielding plate 140, the first light shielding plate 141 is disposed on the rear surface side of the case 110, and the second light shielding plate 142 is disposed on the front surface side of the case 110. Therefore, in the light shielding plate 140, the first light shielding plate 141 is bonded to the cover 112 and is integrated with the cover 112. More specifically, a surface of the first light shielding plate 141 facing the cover 112 is bonded to the inner surface of the cover 112 and is integrated with the cover 112.

As shown in FIG. 10, the inner surface of the cover 112 is provided with a bonding portion 112a for the light shielding plate 140. The bonding portion 112a has a linear protrusion (linear protrusions) extending in the lateral direction (x-axis direction), and is disposed in a central portion (a region between the first pressing opening 130A and the second pressing opening 130B) of the inner surface of the cover 112. In the light shielding plate 140, the first light shielding plate 141 is bonded to the inner surface of the cover 112 via the bonding portion 112a and is integrated with the cover 112. The method of bonding is not particularly limited. As an example, in the present embodiment, the cover 112 and the first light shielding plate 141 are bonded to each other by welding (for example, ultrasonic welding). In addition, a method such as adhesion or caulking can be adopted for the bonding.

By bonding and integrating the light shielding plate 140 and the cover 112, the light shielding plate 140 is attached to the inside of the cover 112. Accordingly, the pressing openings 130A and 130B provided in the cover 112 are covered with the light shielding plate 140 from the inside of the case 110, and the pressing openings 130A and 130B are shielded from light.

The light shielding plate 140 has a pair of light shielding protrusions 143A and 143B on a rear surface as a configuration for enhancing the light shielding properties of the pressing openings 130A and 130B. In the present embodiment, since the first light shielding plate 141 constitutes the rear surface of the light shielding plate 140, the first light shielding plate 141 is provided with the light shielding protrusions 143A and 143B.

The light shielding protrusions 143A and 143B are composed of protrusions having a shape that fits into the pressing openings 130A and 130B. Therefore, an outer shape (outline shape of the outer periphery) thereof has a shape corresponding to an inner peripheral shape of the pressing openings 130A and 130B. As an example, in the present embodiment, the light shielding protrusions 143A and 143B are composed of frame-shaped protrusions corresponding to the inner peripheral shapes of the pressing openings 130A and 130B.

The light shielding plate 140 integrated with the cover 112 is superimposed on the cover 112 to cover the pressing openings 130A and 130B provided in the cover 112, and the light shielding protrusions 143A and 143B are fitted into the pressing openings 130A and 130B.

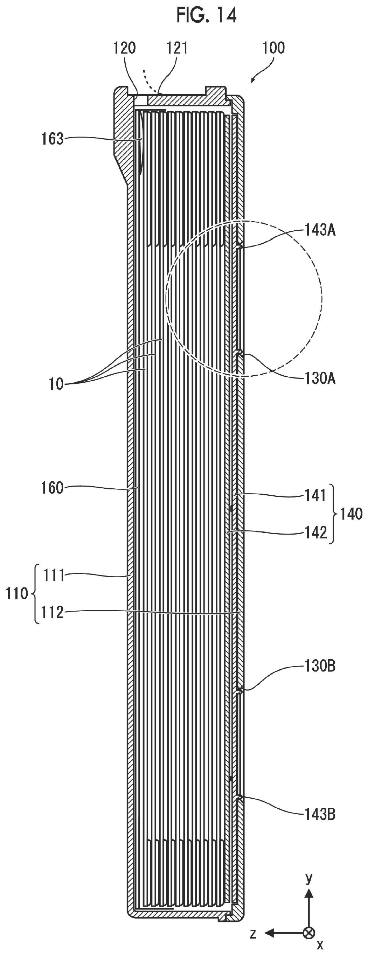

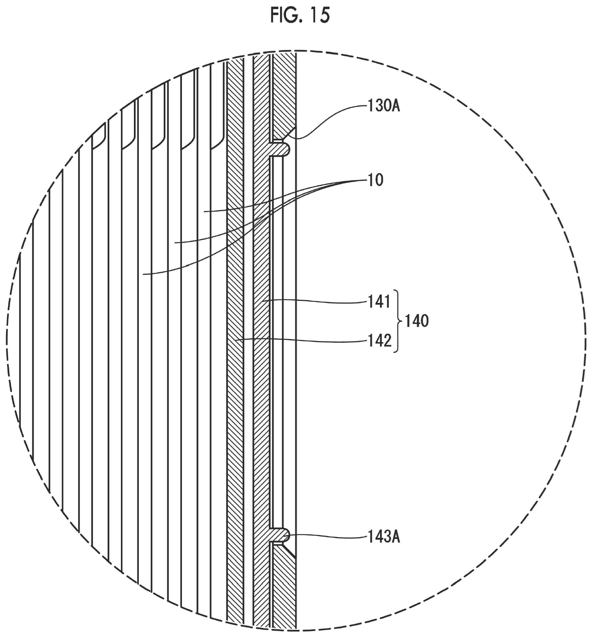

FIG. 14 is a cross-sectional view of the cartridge. In addition, FIG. 15 is an enlarged view of a part of FIG. 14 (a region surrounded by a circle indicated by a broken line). FIG. 14 shows the cartridge in a non-use state.

As shown in FIGS. 14 and 15, in the case 110, the pressing openings 130A and 130B on the rear surface are covered from the inside of the case 110 by the light shielding plate 140. Further, the light shielding protrusions 143A and 143B provided in the light shielding plate 140 are fitted into the pressing openings 130A and 130B. By fitting the light shielding protrusions 143A and 143B into the pressing openings 130A and 130B, the light shielding protrusions 143A and 143B act as a barrier of light, and the entry of light from the gap is restrained. As a result, the light shielding properties of the pressing openings 130A and 130B can be improved. In particular, the light shielding performance in a case where the light shielding plate 140 is pressed in an environment that is not a darkroom can be improved.

The light shielding plate 140 has a function of supporting the instant film 10 accommodated in the case 110 in addition to a function of shielding the pressing openings 130A and 130B. Specifically, in a case where the light shielding plate 140 is pressed by a pressing member through the pressing openings 130A and 130B, the instant film 10 in the case 110 is sandwiched and supported between the light shielding plate 140 and the inner wall surface on the front surface side of the case 110.

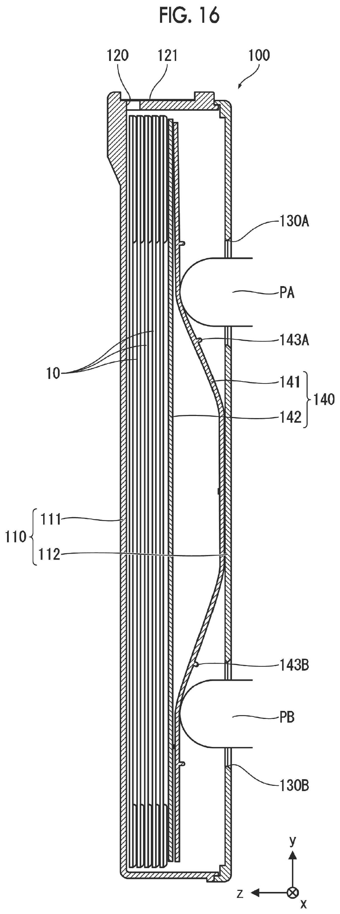

FIG. 16 is a cross-sectional view of the cartridge at the time of pressing. FIG. 16 shows a state after a plurality of sheets of the instant film 10 are used (after a plurality of sheets are discharged).

As shown in FIG. 16, the pressing members PA and PB inserted into the pressing openings 130A and 130B press the instant film 10 in the case 110 in the stacking direction through the light shielding plate 140.

The light shielding plate 140 moves the second light shielding plate 142 toward the instant film 10 by elastically deforming the first light shielding plate 141. That is, the instant film 10 is moved in a direction in which the instant film 10 is pressed. In this case, the second light shielding plate 142 moves while maintaining a state of being substantially parallel to the inner wall surface on the front surface side of the case 110. The second light shielding plate 142 moves toward the front surface side each time one sheet of the instant film 10 in the case 110 is discharged.

The first light shielding plate 141 is provided with slits 141a extending in a direction orthogonal to a longitudinal direction of the first light shielding plate 141 to enhance bendability along a pressing direction (see FIGS. 12 and 13). The slits 141a are disposed above and below the bonding portion 112a (see FIG. 10) with the cover 112.

In this way, the instant film 10 in the case 110 is pressed through the light shielding plate 140, and the instant film 10 is sandwiched and supported between the second light shielding plate 142 and the inner wall surface in the case (the inner wall surface on the front surface side of the case 110). As a result, the leading instant film 10 (the instant film 10 positioned at the uppermost position in the pressing direction) can be always positioned and held at a predetermined position.

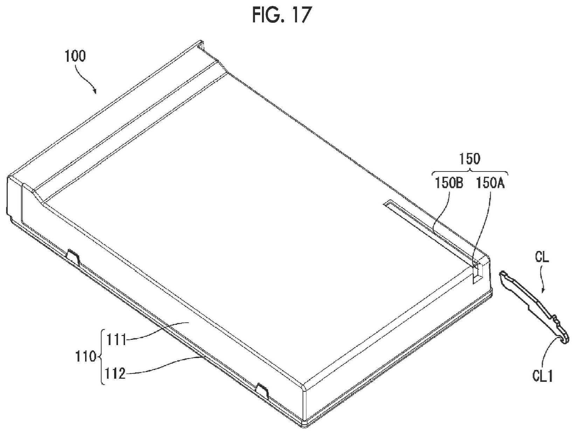

The discharge (feeding) of the instant film 10 is performed by the claw. FIG. 17 is a conceptual diagram of the discharge of the instant film by the claw.

In general, the claw CL is composed of a thin plate piece-shaped member including a hook-shaped engaging portion CL1 at a distal end. The claw CL is moved along the discharge direction of the instant film 10, and the instant film 10 is engaged with the engaging portion CL1 at the distal end to discharge the instant film 10 from the case 110. The claw CL is an example of an engaging member.

As shown in FIG. 17, a claw opening 150 for inserting the claw CL at a predetermined position is provided on the front surface of the case 110. The claw opening 150 is composed of a slit-shaped opening (hole) extending from a bottom surface portion of the case 110 along the discharge direction of the instant film 10. More specifically, the claw opening 150 includes a claw bottom surface opening 150A provided on the bottom surface portion of the case 110 and a claw front surface opening 150B provided on the front surface portion of the case 110, and both of these form one slit-shaped opening. The claw bottom surface opening 150A is an opening that enables the insertion of the claw CL from the bottom surface. The claw front surface opening 150B is an opening that enables the movement of the claw CL in the discharge direction. Therefore, the claw front surface opening 150B is disposed along the discharge direction of the instant film 10. The claw opening 150 is composed of a width (width in which the claw CL can be inserted) corresponding to the thickness of the claw CL. The claw opening 150 is an example of a second opening.

As shown in FIG. 17, in the cartridge 100 of the present embodiment, the claw opening 150 is disposed in the vicinity of an end portion on one side in the lateral direction (x-axis direction) on the front surface of the case 110 (is disposed in the vicinity of the end portion on the right side in a front view).

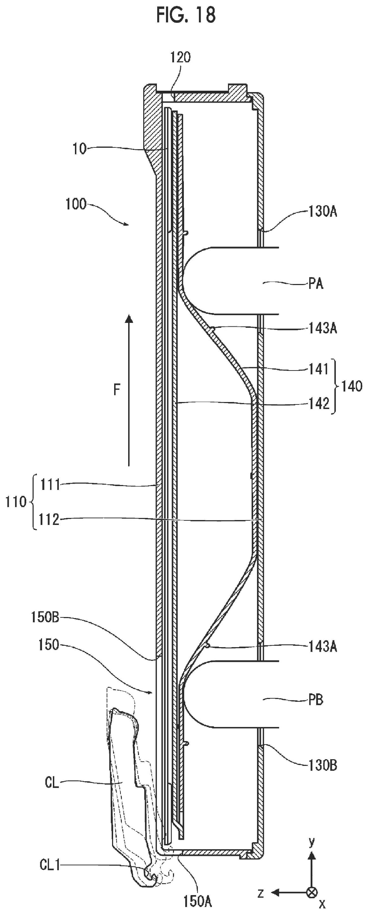

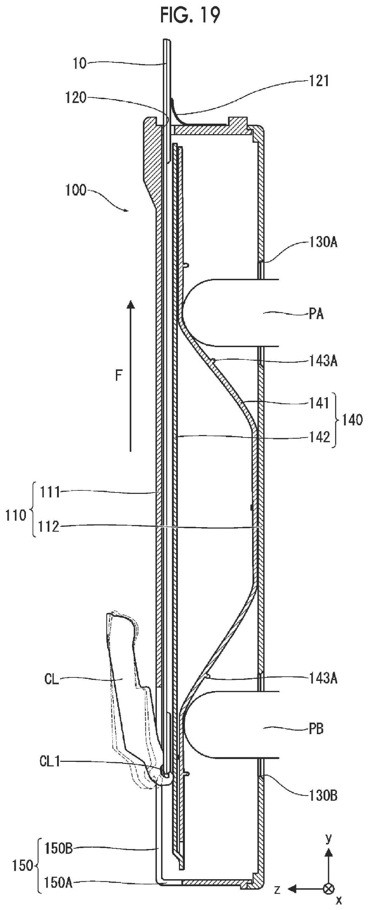

FIGS. 18 and 19 are explanatory views of a discharge operation of the instant film by the claw. FIGS. 18 and 19 show an example of a case where the last one sheet is discharged. That is, an example of a case where the instant film 10 positioned at the lowest position in the pressing direction is discharged is shown.

As shown in FIG. 18, the claw CL moves along the discharge direction of the instant film and enters the case 110 from the claw bottom surface opening 150A.

In a case where the claw CL enters the case 110, the claw CL engages with the back end portion of the leading instant film 10. More specifically, the distal end of the hook-shaped engaging portion CL1 enters between the leading instant film 10 and the next instant film 10, and the claw CL engages with the back end portion of the leading instant film 10.

As described above, FIGS. 18 and 19 show an example of a case where the last one sheet is discharged. In this case, the distal end of the engaging portion CL1 enters between the instant film 10 and the light shielding plate 140 (more specifically, between the instant film 10 and the second light shielding plate 142) and engages with the back end portion of the last instant film 10.

Further, as the claw CL moves, as shown in FIG. 19, the instant film 10 engaged with the claw CL is pressed by the claw CL and is discharged from the film discharge port 120.

In a case where the claw CL moves to a predetermined position, the claw CL is released from the claw opening 150 and is restored to the original position (origin position).

In this way, the claw CL moving along the discharge direction is engaged with the instant film 10 in the case 110, and the instant film 10 is discharged from the case 110.

As described above, the instant film 10 in the case 110 is supported by the light shielding plate 140. Therefore, as shown in FIG. 18, the light shielding plate 140 is in contact with the last instant film 10.

As described above, the instant film 10 is discharged from the case 110 by engaging the claw. Therefore, in a case where there is no gap between the instant film 10 and the light shielding plate 140 at least in a portion where the claw is engaged, the claw cannot be engaged with only the instant film 10, and a discharge error occurs.

Therefore, in the cartridge 100 of the present embodiment, a recessed engagement avoidance portion 144 is provided in the light shielding plate 140 to correspond to a portion where the claw is engaged, and the claw is prevented from being engaged with the light shielding plate 140. That is, a gap is secured between the light shielding plate 140 and the instant film 10 to such an extent that the distal end of the claw can enter, and the claw is prevented from being engaged with the light shielding plate 140.

As shown in FIGS. 11 to 13, the engagement avoidance portion 144 is configured by combining a recess 144A provided in the second light shielding plate 142 and a notch portion 144B provided in the first light shielding plate 141. The case 110 of the present embodiment is provided with a claw opening 150 at a position on the lower right side in the front view (see FIG. 6). Therefore, the engagement avoidance portion 144 is provided at a lower right position of the light shielding plate 140 in the front view. More specifically, the engagement avoidance portion 144 is provided at a corner portion on the lower right side.

The recess 144A provided in the second light shielding plate 142 is provided at a corner portion on the lower right side in the front view of the second light shielding plate 142 as a rectangular recess that is recessed to the rear surface side along the thickness direction of the light shielding plate 140.

The notch portion 144B provided in the first light shielding plate 141 is provided at a corner portion on the lower right side in the front view of the first light shielding plate 141 as a rectangular notch that can accommodate the recess 144A of the second light shielding plate 142.

By providing the notch portion 144B in the first light shielding plate 141 and providing the recess 144A in the second light shielding plate 142, it is possible to provide the light shielding plate 140 having a shape without a notch portion as a whole. As a result, the light shielding performance can be improved.

In a case of discharging the last instant film 10, as shown in FIG. 18, the claw CL enters a gap formed between the engagement avoidance portion 144 and the instant film 10 and is engaged with the instant film 10. As a result, the instant film 10 can be stably discharged up to the last one sheet.

In the present embodiment, the recessed engagement avoidance portion 144 provided in the light shielding plate 140 is an example of a first recess.

As shown in FIG. 8, a cover sheet 160 is further accommodated in the case 110. The cover sheet 160 is disposed to be superimposed on the observation surface 10b of the leading instant film 10. Therefore, in the unused cartridge 100, the cover sheet 160 is disposed at the uppermost position in the pressing direction.

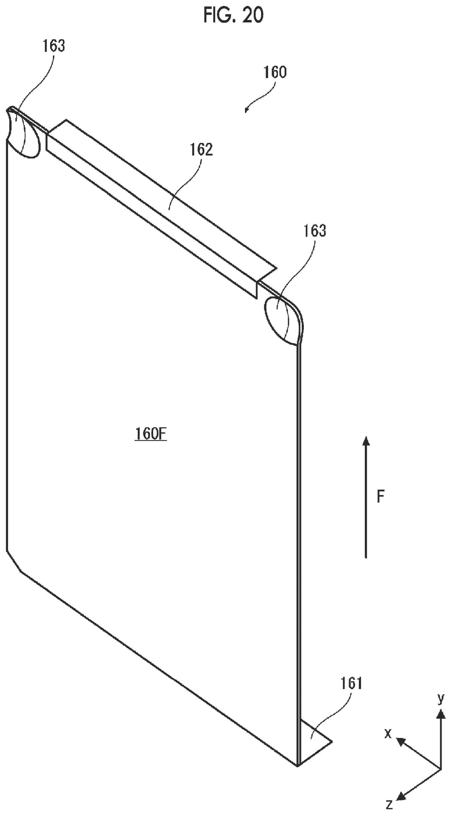

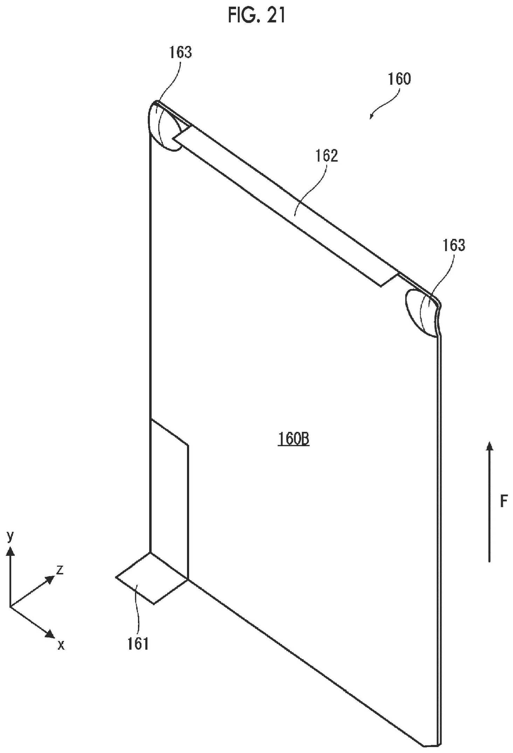

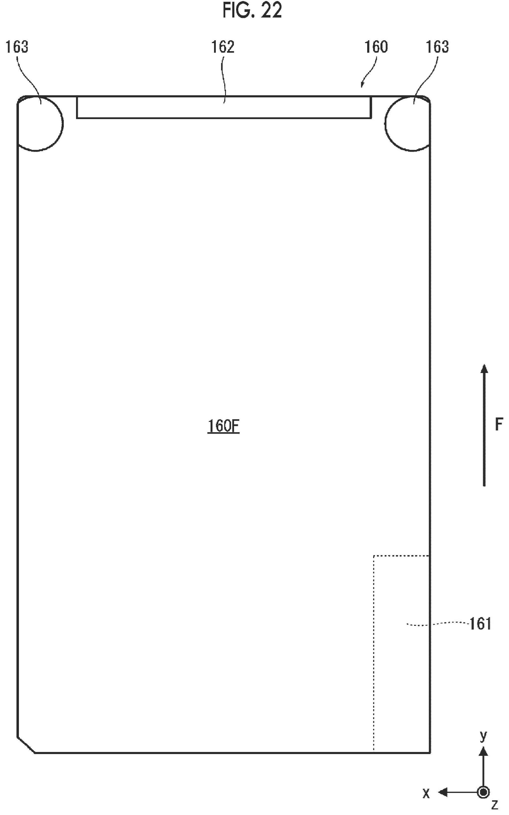

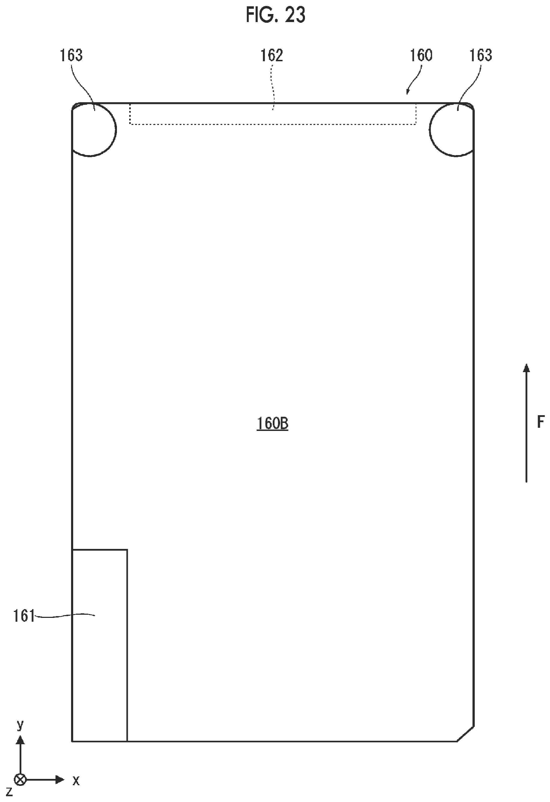

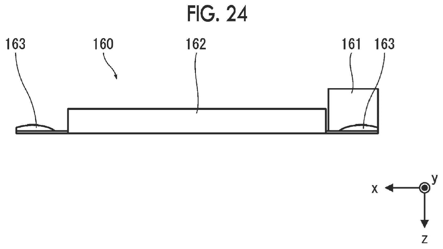

FIG. 20 is a front perspective view of the cover sheet, and FIG. 21 is a rear perspective view of the cover sheet. FIG. 22 is a front view of the cover sheet, FIG. 23 is a rear view of the cover sheet, and FIG. 24 is a top view of the cover sheet. In FIGS. 20 to 23, reference character F denotes an advance direction (discharge direction) of the cover sheet 160.

The cover sheet 160 has a card shape of substantially the same planar size as the instant film 10, but has a smaller thickness than that of the instant film 10. The cover sheet 160 is made of a resin having light shielding properties (e.g., polystyrene containing carbon black), and is configured to be elastically deformable while having predetermined rigidity.

The cover sheet 160 is disposed to be superimposed on the observation surface 10b of the leading instant film 10, abuts against the inner surface of the cover 112, and shields the claw opening 150 from light from the inside of the case 110. The claw opening 150 is shielded from light by the cover sheet 160 and a skirt member 161 attached to the cover sheet 160. The skirt member 161 is composed of a strip-shaped film having light shielding properties.

In addition, a stopper film 162 is provided at the front end in the advance direction F of the cover sheet 160. The stopper film 162 engages with the inner wall surface of the case 110 and restrains the cover sheet 160 from being discharged carelessly. Therefore, the stopper film 162 is deformed in a case where a certain or higher force is applied to the cover sheet 160 to be fed, and enables the cover sheet 160 to be discharged.

The front end in the advance direction F of the cover sheet 160 is provided with one pair of dimples 163 at corner portions. Each dimple 163 has a semispherical shape, and is configured with a predetermined thickness so as to be concave on the front surface 160F side of the cover sheet 160 and convex on the rear surface 160B side. Therefore, the dimple 163 constitutes a recess on the front surface 160F side of the cover sheet 160 and constitutes a protrusion on the rear surface 160B side. The rear surface 160B of the cover sheet 160 where the dimples 163 are convex is a surface to be superimposed on the instant film 10. In the instant film 10, the observation surface 10b is a surface to be superimposed on the cover sheet 160. Therefore, in the cover sheet 160, the rear surface 160B where the dimples 163 are convex is disposed to face the observation surface 10b of the instant film 10.

The dimples 163 have a function of restraining the leading instant film 10 from being discharged together. The cover sheet 160 is discharged after the cartridge 100 is loaded into the printer. At this time, the leading instant film 10 may be taken out together with the cover sheet 160 without being separated from the cover sheet 160 (so-called double feed). The presence of the dimples 163 blocks the instant film 10 from accompanying the cover sheet 160 and passing through the film discharge port 120 to restrain the instant film 10 from being discharged together.

In this way, the dimples 163 restrain the instant film 10 from being discharged together in relation to the film discharge port 120. Therefore, the heights (protrusion amounts) of the dimples 163 are set in view of the relationship with the slit width of the film discharge port 120 (the width in the thickness direction of the instant film 10). Preferably, the heights are set equal to the slit width of the film discharge port 120 or slightly greater (set such that the dimples 163 can pass through when deformed (crushed)).

As described above, the cover sheet 160 is discharged after the cartridge 100 is loaded into the printer. The discharge of the cover sheet 160 is performed using the claw CL in the same manner as the instant film 10. The claw CL engages with the rear end portion of the cover sheet 160 to discharge the cover sheet 160 from the film discharge port 120.

As described above, the cartridge 100 of the present embodiment has a configuration in which the instant film 10 accommodated in the case 110 is pressed from the exposure surface side. In a case where the cartridge 100 having such a configuration is placed in an environment that is not a darkroom, a problem of light leakage from the pressing openings 130A and 130B arises. However, the cartridge 100 of the present embodiment comprises the light shielding plate 140, and thus the light leakage can be restrained. That is, the light shielding plate 140 having a shape (hole-free shape) that has no notch portion on the outer periphery and has no opening in the plane is provided, and thus the incidence of light from the pressing openings 130A and 130B can be restrained. In addition, the light shielding protrusions 143A and 143B that are fitted to the pressing openings 130A and 130B are provided on the light shielding plate 140, and thus the incidence of light from the pressing openings 130A and 130B can be more effectively restrained. As a result, the cartridge 100 having high light shielding properties can be realized.

### Printer

### External Configuration of Printer

As described above, the printer 200 of the present embodiment is configured as a so-called mobile printer. As shown in FIGS. 1 and 2, the printer 200 has a flat box-shaped housing 210.

A print outlet 212 is provided on an upper surface portion of the housing 210. The print outlet 212 is configured with a slit-shaped opening through which the instant film 10 can pass. The printed instant film 10 is discharged from the print outlet 212.

A film door 213 is provided on a rear surface portion of the housing 210. As shown in FIG. 3, the film door 213 opens and closes the cartridge loading portion 220. The film door 213 is locked by a film door lock 214 provided on a side surface portion of the housing 210.

### Internal Configuration of Printer

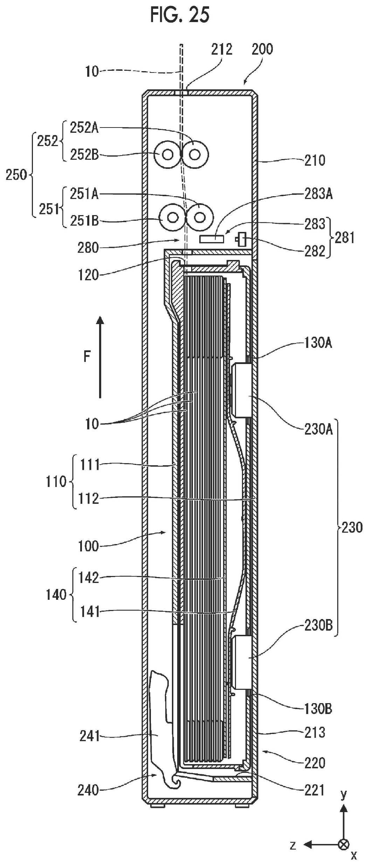

FIG. 25 is a schematic configuration diagram of the inside of the printer.

As shown in FIG. 25, the printer 200 includes a cartridge loading portion 220, a film pressing portion 230, a film feeding section 240, a film transport section 250, a detection section (not shown), an exposure section 280, and the like inside a housing 210.

### Cartridge Loading Portion

The cartridge loading portion 220 includes a cartridge loading chamber 221 that accommodates the cartridge 100. The cartridge loading chamber 221 is configured as a recessed space into which the cartridge 100 is fitted, and is opened and closed by the film door 213 (see FIG. 3). The cartridge 100 is fitted into the cartridge loading chamber 221 and the film door 213 is closed to be loaded into the printer 200. By closing the film door 213, the cartridge loading chamber 221 is shielded from light and is in a darkroom state. The cartridge 100 loaded into the printer 200 is positioned and held in the cartridge loading chamber 221.

The cartridge loading portion 220 includes a cartridge loading detection section (not shown) that detects the loading of the cartridge 100 into the cartridge loading chamber 221.

In addition, the cartridge loading portion 220 includes a film door opening/closing detection section (not shown) that detects the opening and closing of the film door 213.

In the present embodiment, the cartridge loading portion 220 is an example of an accommodation portion.

### Film Pressing Portion

The film pressing portion 230 presses the instant film 10 (having the same meaning as the instant film 10 in the case 110) in the cartridge 100 loaded into the cartridge loading portion 220 in the stacking direction through the pressing openings 130A and 130B. The film pressing portion 230 is provided in the film door 213. More specifically, the film pressing portion 230 is provided on an inner surface of the film door 213.

The film pressing portion 230 includes a pair of pressing units 230A and 230B corresponding to the pair of pressing openings 130A and 130B provided in the cartridge 100. Hereinafter, as necessary, one pressing unit 230A will be referred to as a first pressing unit 230A, and the other pressing unit 230B will be referred to as a second pressing unit 230B to distinguish between the two. The first pressing unit 230A is inserted into the first pressing opening 130A of the cartridge 100 in a case where the film door 213 is closed. In addition, the second pressing unit 230B is inserted into the second pressing opening 130B of the cartridge 100 in a case where the film door 213 is closed. Therefore, the first pressing unit 230A and the second pressing unit 230B are disposed to correspond to the first pressing opening 130A and the second pressing opening 130B of the cartridge 100 loaded into the cartridge loading chamber 221. As described above, the first pressing opening 130A is disposed on the upper side (= the downstream side in the discharge direction of the instant film 10) of the cartridge 100, and the second pressing opening 130B is disposed on the lower side (= the upstream side in the discharge direction of the instant film 10) of the cartridge 100. Therefore, the first pressing unit 230A is disposed on the upper side (= the downstream side in the discharge direction of the instant film 10) of the film door 213, and the second pressing unit 230B is disposed on the lower side (= the upstream side in the discharge direction of the instant film 10) of the film door 213.

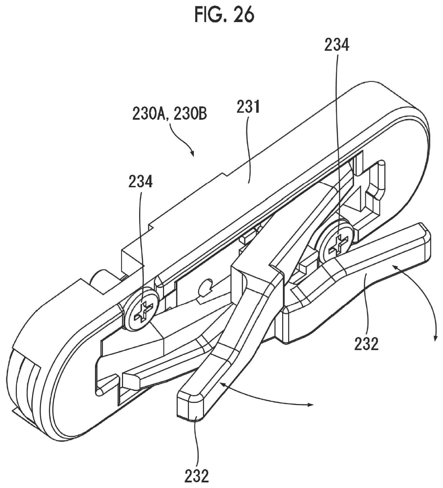

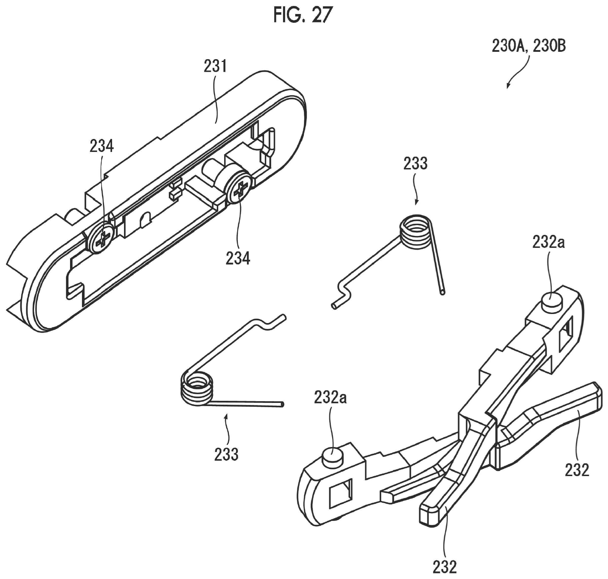

FIG. 26 is a perspective view of the pressing unit. FIG. 27 is an exploded perspective view of the pressing unit.

As shown in FIGS. 26 and 27, the pressing units 230A and 230B are composed of a main body frame 231, a pair of pressing levers 232, and a pair of springs 233.

The main body frame 231 has a thin plate shape having an outer shape corresponding to the inner peripheral shapes of the pressing openings 130A and 130B, and is configured to be inserted into the pressing openings 130A and 130B. The main body frame 231 is attached to the film door 213 via a screw 234.

The pair of pressing levers 232 have a rod-like shape and are disposed to intersect each other. Each pressing lever 232 has a shaft 232a at a base end portion. Each pressing lever 232 is swingably supported by the main body frame 231 via the shaft 232a.

The pair of springs 233 each bias the pair of pressing levers 232 in a protruding direction. That is, the distal end of each pressing lever 232 is biased in a direction of protruding from the main body frame 231. The spring 233 is composed of, for example, a torsion spring, and is mounted on the shaft 232a of the pressing lever 232.

In a case where the film door 213 is closed, the pressing units 230A and 230B are inserted into the pressing openings 130A and 130B of the cartridge 100 loaded in the cartridge loading portion 220. In the pressing units 230A and 230B inserted into the pressing openings 130A and 130B, the pair of pressing levers 232 abut on the light shielding plate 140, and the light shielding plate 140 is pressed toward the instant film 10 by the biasing force of the spring 233. As a result, the instant film 10 in the cartridge 100 is pressed toward the front side of the cartridge 100 along the stacking direction.

By pressing the instant film 10 in the cartridge 100 with the film pressing portion 230 in this way, the instant film 10 is held at a predetermined position. In particular, the leading instant film 10 is held at the predetermined position.

In the present embodiment, the film pressing portion 230 is an example of a pressing portion. In addition, the first pressing unit 230A is an example of a first pressing portion, and the second pressing unit 230B is an example of a second pressing portion. In addition, the pressing levers 232 provided in the pressing units 230A and 230B are examples of a pressing member.

### Film Feeding Section

The film feeding section 240 feeds the instant films 10 one by one from the cartridge 100 loaded in the cartridge loading portion 220. As described above, the feeding of the instant film 10 is performed by the claw.

The film feeding section 240 comprises a claw 241 and a claw driving portion (not shown) that drives the claw 241. The claw driving portion includes a drive source and a drive mechanism, and moves the claw 241 along a predetermined moving path.

The instant films 10 in the cartridge 100 are engaged with the moving claw 241 and are fed one by one in order from the leading end. In the present embodiment, the film feeding section 240 is an example of a feeding section.

### Film Transport Section

The film transport section 250 receives the instant film 10 fed from the cartridge 100 and transports the instant film 10 along a predetermined transport path.

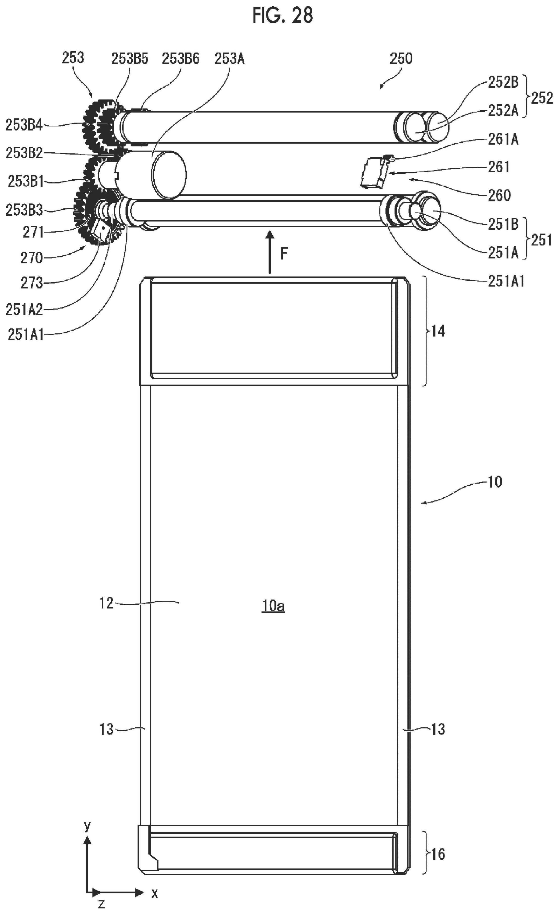

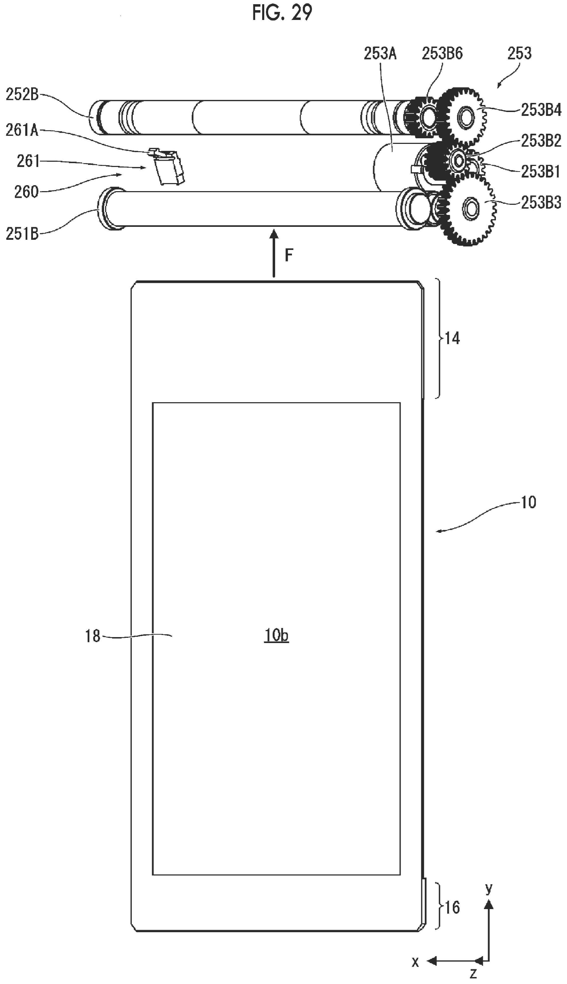

FIGS. 28 and 29 are perspective views showing a schematic configuration of the film transport section. FIG. 28 is a perspective view of the transported instant film 10 as viewed from the exposure surface 10a side. In addition, FIG. 29 is a perspective view of the transported instant film 10 as viewed from the observation surface 10b side.

The film transport section 250 comprises a transport roller pair 251, a developing roller pair 252, a film transport driving portion 253, and the like. In the present embodiment, the film transport section 250 is an example of a transport section.

### Transport Roller Pair

The transport roller pair 251 is composed of a capstan roller 251A and a pinch roller 251B, and transports the instant film 10 by sandwiching the instant film 10 between the capstan roller 251A and the pinch roller 251B. In the transport roller pair 251, the capstan roller 251A is disposed on the exposure surface 10a side of the instant film 10, and the pinch roller 251B is disposed on the observation surface 10b side.

The capstan roller 251A has a pair of abutting parts 251A1. The abutting part 251A1 is configured as a large-diameter portion having a predetermined width, and is disposed in the vicinity of both ends of the capstan roller 251A. The capstan roller 251A abuts the abutting part 251A1 against the instant film 10 to sandwich the instant film 10. More specifically, the capstan roller 251A abuts the abutting part 251A1 against the side edge portion 13 of the instant film 10 to sandwich the instant film 10. Therefore, the abutting part 251A1 is disposed to correspond to the side edge portion 13 of the instant film 10.

The capstan roller 251A has a large number of minute protrusions (not shown) on an outer peripheral surface of the abutting part 251A1. The minute protrusions function as anti-slip (so-called spikes) during transport.

The pinch roller 251B is disposed to abut against the capstan roller 251A under pressure by being biased by a biasing mechanism (not shown). More specifically, the outer periphery is disposed to abut against the abutting part 251A1 of the capstan roller 251A under pressure.

The instant film 10 fed out from the cartridge 100 by the claw 241 is supplied between the capstan roller 251A and the pinch roller 251B. The instant film 10 supplied between the capstan roller 251A and the pinch roller 251B is transported by being fed by the rotating capstan roller 251A. In this case, the instant film 10 is transported with both edge portions (portions of the side edge portion 13) sandwiched between the capstan roller 251A and the pinch roller 251B. More specifically, the instant film 10 is transported with both edge portions sandwiched between the abutting part 251A1 of the capstan roller 251A and the pinch roller 251B.

### Developing Roller Pair

The developing roller pair 252 is disposed on the downstream side of the transport roller pair 251. The developing roller pair 252 is composed of a first developing roller 252A and a second developing roller 252B, and transports the instant film 10 by sandwiching the instant film 10 between the first developing roller 252A and the second developing roller 252B. Then, the development treatment liquid is developed in the transport process. In the developing roller pair 252, the first developing roller 252A is disposed on the exposure surface 10a side of the instant film 10, and the second developing roller 252B is disposed on the observation surface 10b side.

The instant film 10 fed from the transport roller pair 251 is supplied between the first developing roller 252A and the second developing roller 252B. The instant film 10 supplied between the first developing roller 252A and the second developing roller 252B is transported by being fed by the rotating first developing roller 252A and the rotating second developing roller 252B. In this case, the instant film 10 is transported by being sandwiched between the first developing roller 252A and the second developing roller 252B over the entire region in the width direction. The instant film 10 is transported while being sandwiched between the first developing roller 252A and the second developing roller 252B, so that the development treatment liquid pod 14a is crushed. As a result, the development treatment liquid is supplied from the pod portion 14. The development treatment liquid is developed from the upstream to the downstream by the transport of the instant film 10. Then, the surplus amount is trapped in the trap portion 16.

The instant film 10 on which the development treatment liquid is developed is transported to the developing roller pair 252 and is discharged from the print outlet 212.

### Film Transport Driving Portion

The film transport driving portion 253 drives the transport roller pair 251 and the developing roller pair 252. More specifically, the capstan roller 251A constituting the transport roller pair 251 and the first developing roller 252A and the second developing roller 252B constituting the developing roller pair 252 are rotationally driven.

The film transport driving portion 253 is composed of a motor 253A as a drive source, a gear mechanism 253B that transmits the power of the motor 253A to the capstan roller 251A, the first developing roller 252A, and the second developing roller 252B, and the like.

The motor 253A is disposed between the transport roller pair 251 and the developing roller pair 252. The output shaft of the motor 253A is disposed parallel to the rotation axes of the transport roller pair 251 and the developing roller pair 252.

The gear mechanism 253B is composed of a gear train in which a plurality of gears are combined, and includes a first gear 253B1, a second gear 253B2, a third gear 253B3, a fourth gear 253B4, a fifth gear 253B5, and a sixth gear 253B6.

The first gear 253B1 is provided on the output shaft of the motor 253A. The first gear 253B1 is driven by the motor 253A to rotate.

The second gear 253B2 is an idler gear. The second gear 253B2 is rotatably supported by a frame (not shown). The second gear 253B2 meshes with the first gear 253B1, the third gear 253B3, and the fourth gear 253B4. The second gear 253B2 rotates as the rotation of the first gear 253B1 is transmitted.

The third gear 253B3 is provided on the capstan roller 251A. The third gear 253B3 meshes with the second gear 253B2. The third gear 253B3 rotates as the rotation of the second gear 253B2 is transmitted. The capstan roller 251A rotates as the third gear 253B3 rotates.

The fourth gear 253B4 is provided on the first developing roller 252A. The fourth gear 253B4 meshes with the second gear 253B2. The fourth gear 253B4 rotates as the rotation of the second gear 253B2 is transmitted. The first developing roller 252A rotates as the fourth gear 253B4 rotates.

The fifth gear 253B5 is provided on the first developing roller 252A together with the fourth gear 253B4. Therefore, the fifth gear 253B5 rotates as the first developing roller 252A rotates.

The sixth gear 253B6 is provided on the second developing roller 252B. The sixth gear 253B6 meshes with the fifth gear 253B5. The sixth gear 253B6 rotates as the rotation of the fifth gear 253B5 is transmitted. The second developing roller 252B rotates as the sixth gear 253B6 rotates.

In a case where the motor 253A is driven, the film transport driving portion 253 configured as described above rotationally drives the capstan roller 251A, the first developing roller 252A, and the second developing roller 252B via the gear mechanism 253B. That is, the rotation of the motor 253A is transmitted to the third gear 253B3 from the first gear 253B1 via the second gear 253B2, and the capstan roller 251A rotates. In addition, the rotation of the motor 253A is transmitted to the fourth gear 253B4 from the first gear 253B1 via the second gear 253B2, and the first developing roller 252A rotates. In addition, the first developing roller 252A rotates, and the rotation is transmitted to the sixth gear 253B6 via the fifth gear 253B5, and the second developing roller 252B rotates.

The capstan roller 251A, the first developing roller 252A, and the second developing roller 252B rotate, and thus the feed is applied to the instant film 10, and the instant film 10 is transported along the transport path.

### Detection Section

The detection section includes a film distal end detection section 260 that detects the distal end of the instant film 10 at a predetermined position on the transport path, and a rotation amount detection section 270 that detects the rotation amount of the capstan roller 251A.

### Film Distal End Detection Section

As described above, the film distal end detection section 260 detects the distal end of the instant film 10 at a predetermined position on the transport path. In other words, the film distal end detection section 260 detects that the distal end of the instant film 10 has passed through a predetermined position (reference position) on the transport path. For example, in the present embodiment, the reference position is set between the transport roller pair 251 and the developing roller pair 252. Therefore, the film distal end detection section 260 detects that the distal end of the instant film 10 has passed through the reference position.

For example, the film distal end detection section 260 of the present embodiment detects the distal end of the instant film 10 by using a detection switch 261.

The detection switch 261 includes a swinging detection lever 261A. The detection switch 261 is turned on and off by the swing of the detection lever 261A. More specifically, the detection lever 261A is pushed down to turn on the detection switch 261. In addition, the detection switch 261 is automatically returned to be turned off by releasing the force of pushing down.

The detection switch 261 is installed at a position where the detection lever 261A is engaged with the instant film 10 passing through the reference position. That is, the detection lever 261A is installed to be pushed down by the instant film 10 passing through the reference position. Accordingly, the detection switch 261 is turned on in a case where the distal end of the instant film 10 passes through the reference position, and the detection switch 261 is turned off in a case where the rear end of the instant film 10 passes through the reference position.

Therefore, it is possible to detect that the instant film 10 has passed through the reference position based on the state (ON or OFF) of the detection switch 261. That is, it is possible to detect that the distal end of the instant film 10 has passed through the reference position by detecting that the detection switch 261 is turned on, and it is possible to detect that the rear end of the instant film 10 has passed through the reference position by detecting that the detection switch 261 is turned off.

In the present embodiment, the distal end of the instant film 10 is detected using the detection switch 261, but the configuration of detecting the distal end of the instant film 10 is not limited thereto. In addition, for example, a configuration of detecting the distal end of the instant film 10 using a noncontact sensor or the like can also be adopted.

### Rotation Amount Detection Section

As described above, the rotation amount detection section 270 detects the rotation amount of the capstan roller 251A. As an example, in the present embodiment, the rotation amount of the capstan roller 251A is detected using an optical encoder (rotary encoder), particularly, a reflective type encoder.

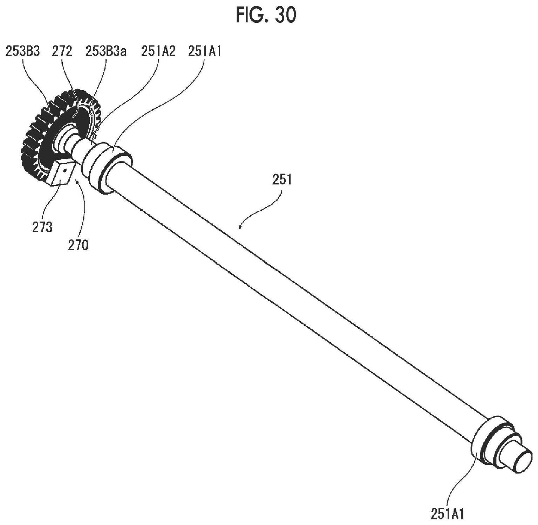

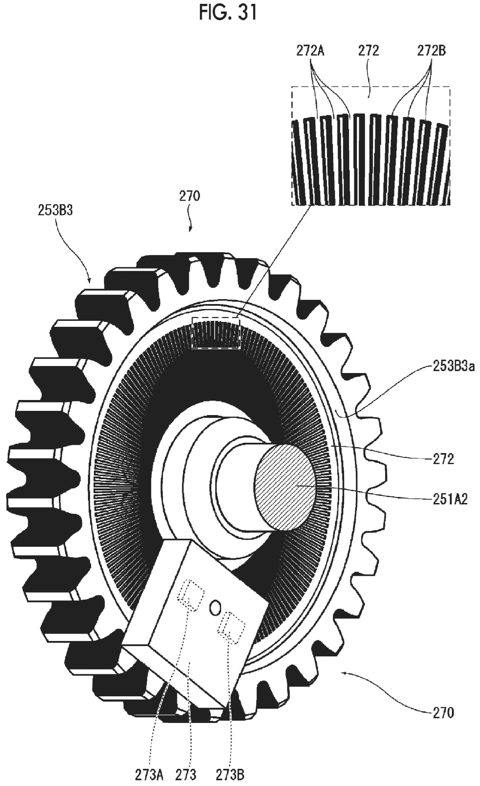

FIG. 30 is a perspective view of the capstan roller including the rotation amount detection section. FIG. 31 is a perspective view showing a configuration of the rotation amount detection section.

As described above, in the present embodiment, the rotation amount of the capstan roller 251A is detected using an encoder 271.

The encoder 271 is a reflective type encoder and comprises a code wheel (encoder disk) 272 and a sensor module 273.

The code wheel 272 is a disk-shaped scale and has a configuration in which a reflective portion 272A and a non-reflective portion 272B are alternately disposed on a circumference.

The code wheel 272 is attached to a shaft 251A2 of the capstan roller 251A. For example, in the present embodiment, the code wheel 272 is attached to a gear (third gear 253B3) mounted on the shaft 251A2 of the capstan roller 251A. More specifically, the code wheel 272 is attached to an inner side (capstan roller side) surface of the third gear 253B3. In particular, the third gear 253B3 of the present embodiment has a circular recess 253B3a in which the code wheel 272 can be accommodated on the inner side surface, and the code wheel 272 is disposed in the recess 253B3a and attached to the third gear 253B3. That is, the code wheel 272 is attached to a bottom surface of the recess 253B3a and attached to the third gear 253B3. As described above, by providing the recess 253B3a on the inner side surface of the third gear 253B3 and installing the code wheel 272 in the recess 253B3a, the width (width of the capstan roller 251A in the axial direction) required for installing the encoder 271 can be reduced. That is, since the sensor module 273 can be installed close to the third gear 253B3 while sufficiently ensuring an effective tooth width of the third gear 253B3, the width required for the installation can be reduced. As a result, the overall size can be reduced. In particular, the size in the lateral direction (axial direction of the capstan roller 251A) can be reduced. In addition, since the effective tooth width of the third gear 253B3 can be ensured, the risk of damage due to the load torque during transport can also be reduced. Further, by disposing the code wheel 272 in the recess 253B3a, a decrease in detection accuracy due to dust or the like generated from the gear can also be suppressed.

In the present embodiment, the code wheel 272 is an example of a reflective member. In addition, the recess 253B3a provided in the inner side surface of the third gear 253B3 is an example of a second recess.

In the present embodiment, the code wheel 272 is disposed in the recess 253B3a of the third gear 253B3, but the code wheel 272 need only be attached coaxially with at least the third gear 253B3.

The sensor module 273 includes a light projecting part 273A and a light receiving part 273B on the same surface and is disposed to face the code wheel 272. Therefore, the sensor module 273 is disposed on the inner side (capstan roller side) of the third gear 253B3. The light projecting part 273A includes a light projecting element (not shown) and projects light toward the code wheel 272. The light receiving part 273B includes a light receiving element (not shown) and receives light reflected by the code wheel 272. That is, the light projected from the light projecting part 273A and reflected by the code wheel 272 is received by the light receiving part 273B.

The light projected from the light projecting part 273A is reflected only by the reflective portion 272A of the code wheel 272. Since the reflective portions 272A are arranged at a constant pitch, the rotation amount of the code wheel 272 can be detected by detecting the reflection of light from the code wheel 272 with the light receiving part 273B.

By detecting the rotation amount of the code wheel 272, the rotation amount of the capstan roller 251A to which the code wheel 272 is attached can be detected. In addition, since the rotation amount of the capstan roller 251A can be detected, the speed of the instant film 10 transported by the capstan roller 251A can be detected.

As described above, the rotation amount detection section 270 of the present embodiment adopts a configuration in which the reflective type encoder 271 is used and the encoder 271 is disposed on the inner side (capstan roller side) of the third gear 253B3 that drives the capstan roller 251A. As a result, the size of the printer 200 can be reduced. In particular, the size in the lateral direction (axial direction of the capstan roller 251A) can be reduced.

### Exposure Section

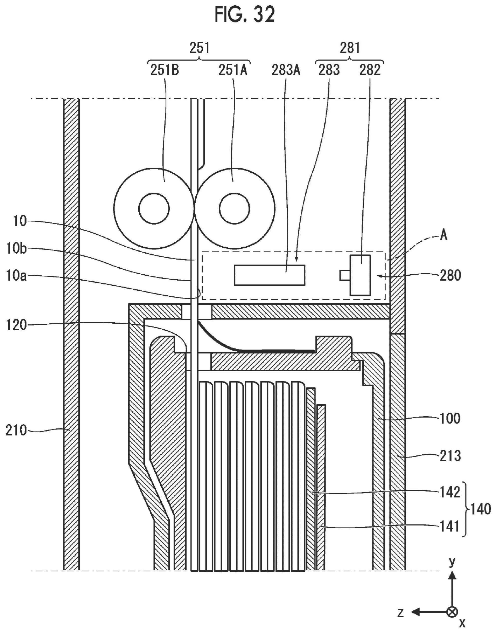

FIG. 32 is a schematic configuration diagram of the exposure section.

As shown in FIG. 32, the exposure section 280 exposes the instant film 10 by irradiating the exposure surface 10a of the instant film 10 transported through the transport path with light (print light). That is, an image is recorded by exposure.

In the present embodiment, the exposure section 280 exposes the instant film 10 between the cartridge loading portion 220 and the film transport section 250. That is, the instant film 10 fed from the cartridge 100 is exposed on the upstream side of the film transport section 250 (more specifically, the upstream side of the transport roller pair 251). Therefore, the exposure section 280 is provided between the cartridge loading portion 220 and the film transport section 250.

The exposure section 280 comprises an exposure head 281. The exposure head 281 is configured with a so-called line head and is disposed to intersect the transport direction of the instant film 10. For example, in the present embodiment, the exposure head 281 is disposed to be orthogonal to the transport direction of the instant film 10.

The exposure head 281 comprises a light source part 282 that emits line-shaped print light and an optical system 283 that focuses the light emitted from the light source part 282 on the exposure surface 10a of the instant film 10.

The light source part 282 has a large number of light emitting elements (not shown) arranged in an array. The light emitting elements selectively emit light depending on the image to be recorded (printed) on the instant film 10. In the present embodiment, the light source part 282 is disposed to face the exposure surface 10a of the instant film 10 transported through the transport path.

The optical system 283 is disposed between the instant film 10 transported through the transport path and the light source part 282. The optical system 283 is configured with at least one lens. For example, in the present embodiment, the optical system 283 is configured with a focusing lens array 283A. The focusing lens array 283A includes a large number of refractive index distribution type lenses arranged in an array, and is disposed such that an optical axis is orthogonal to the exposure surface 10a of the instant film 10. For example, a selfoc lens array (SLA) manufactured by Nippon Sheet Glass Co., Ltd. can be adopted as the focusing lens array 283A (SELFOC is a registered trademark).

The light emitted from each light emitting element of the light source part 282 is transmitted through each refractive index distribution type lens of the focusing lens array 283A constituting the optical system 283, and forms an image on the exposure surface 10a of the instant film 10. The image is recorded on the instant film 10 by emitting the print light from the light source part 282 in conjunction with the transport of the instant film 10.

As described above, the printer 200 of the present embodiment has a configuration of pressing the stacked instant film 10 from the exposure surface 10a side. In the printer 200 having such a configuration, as shown in FIG. 32, a space (in FIG. 32, a region A surrounded by a broken line) is formed on the exposure surface 10a side with respect to the instant film 10 discharged from the cartridge 100. That is, since the instant film 10 is stacked on the exposure surface 10a side with respect to the leading instant film 10 as a reference, a wide space is formed on the exposure surface 10a side with respect to the observation surface 10b side inside the housing 210. By effectively utilizing the space to dispose the exposure section 280, the size of the printer 200 can be reduced. In particular, the size (thickness) of the housing 210 in the thickness direction (front-rear direction; z-axis direction) can be reduced. That is, the exposure section 280 can be disposed within a range of the thickness of the cartridge 100, and the thickness of the housing 210 can be reduced.

### Electric Configuration of Printer

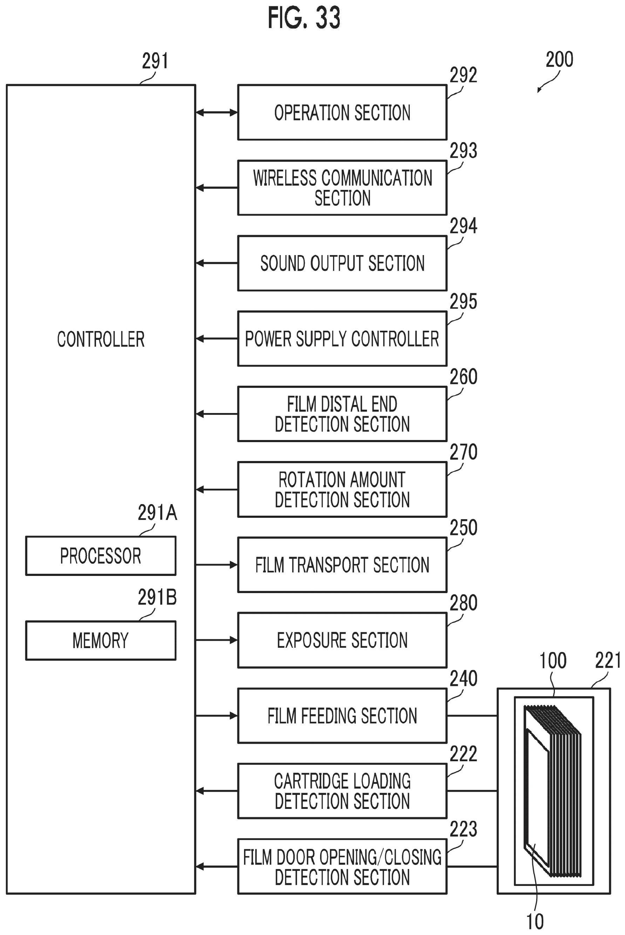

FIG. 33 is a block diagram showing an electric configuration of the printer.

As shown in FIG. 33, the printer 200 comprises, as an electric configuration, a cartridge loading detection section 222, a film door opening/closing detection section 223, a film feeding section 240, a film transport section 250, a film distal end detection section 260, a rotation amount detection section 270, an exposure section 280, a controller 291, an operation section 292, a wireless communication section 293, a sound output section 294, a power supply controller 295, and the like.

The cartridge loading detection section 222, the film door opening/closing detection section 223, the film feeding section 240, the film transport section 250, the film distal end detection section 260, the rotation amount detection section 270, and the exposure section 280 are as described above.

The controller 291 integrally controls an operation of the printer 200. The controller 291 is configured by, for example, a computer that includes a processor 291A and a memory 291B. That is, the computer functions as the controller 291 by executing a predetermined program. The processor 291A is configured by, for example, a central processing unit (CPU). The memory 291B includes a random access memory (RAM), a read only memory (ROM), a flash memory, and the like. The memory 291B stores the program executed by the processor 291A, data required for control, and the like. The program is synonymous with software.

The operation section 292 is a user interface portion for entering various settings, instructions, and the like on printing. The operation section 292 has operational members, such as a physical button, a switch, and a dial, and accepts instructions for power-on/power-off, various settings, and the like.

The wireless communication section 293 communicates with an external apparatus (for example, a smartphone) wirelessly under the control of the controller 291. The communication method is not particularly limited. Communication according to a communication standard such as Bluetooth and Wi-Fi can be adopted. In addition, the wireless communication section 293 can support communication according to a plurality of communication standards. For example, in the present embodiment, the wireless communication with the external apparatus is performed by Bluetooth.

The sound output section 294 includes the speaker, and outputs a predetermined sound (for example, an operation sound, a startup sound, or a warning sound) from the speaker under the control of the controller 291.

The power supply controller 295 controls the supply of power to each unit and the charging of the built-in battery (not shown) under the control of the controller 291.

### Function of Controller

In a case where the printer 200 is used, the controller 291 mainly executes the following processing.

### (1) Processing in Case of Loading Cartridge

In a case where the cartridge 100 is loaded into the cartridge loading chamber 221, processing of discharging the cover sheet 160 from the cartridge 100 is performed.

The controller 291 detects the loading of the cartridge 100 into the cartridge loading chamber 221 via the cartridge loading detection section 222. In addition, the controller 291 detects the opening and closing of the film door 213 via the film door opening/closing detection section 223.

In a case where the cartridge loading detection section 222 detects the loading of the cartridge 100 and the film door opening/closing detection section 223 detects that the film door 213 is closed, the controller 291 drives the film feeding section 240 and the film transport section 250 to discharge the cover sheet 160 from the cartridge 100.

### (2) Printing Processing

The controller 291 receives a work instruction (print job) for printing from an external apparatus (for example, a smartphone) as a connection destination and executes the printing processing. The connection with the external apparatus is performed via the wireless communication section 293.

The controller 291 receives image data to be printed from the external apparatus as the connection destination via the wireless communication section 293.

The controller 291 performs predetermined signal processing on the received image data to generate data for printing. That is, data for recording on the instant film 10 is generated via the exposure head 281.

After the data for printing is generated, the controller 291 controls the film feeding section 240, the film transport section 250, and the exposure section 280 to execute the printing processing.

First, the film feeding section 240 is controlled to discharge one sheet of the instant film 10 from the cartridge 100. Specifically, the claw 241 is operated to discharge one sheet of the instant film 10 from the cartridge 100.

The controller 291 operates the film transport section 250 in accordance with a timing at which the instant film 10 discharged from the cartridge 100 reaches the film transport section 250, and causes the film transport section 250 to transport the instant film 10. Specifically, the film transport driving portion 253 is operated to rotate the transport roller pair 251 and the developing roller pair 252, and the instant film 10 is transported by the rotating transport roller pair 251 and the developing roller pair 252.

The controller 291 drives the exposure section 280 to record an image on the transported instant film 10. That is, the exposure surface 10a is irradiated with light (print light) to expose the instant film 10. In this case, the controller 291 controls the exposure by the exposure section 280 based on the output from the film distal end detection section 260 and the rotation amount detection section 270. That is, the start position of the exposure (recording start position of the image) is controlled based on the detection result of the distal end of the instant film 10 by the film distal end detection section 260. In addition, the interval of the exposure (emission interval of light from the light source part 282) is controlled based on the rotation amount of the capstan roller 251A by the rotation amount detection section 270. Specifically, the transportation speed of the instant film 10 is calculated from the rotation amount of the capstan roller 251A, and the exposure is controlled to be performed in synchronization with the transport of the instant film 10.

In the instant film 10 that has been exposed, the pod portion 14 at the distal end passes through the developing roller pair 252 in the transport process, so that the development treatment liquid is squeezed out from the pod portion 14 and is developed in the exposure region 12. As a result, the development is performed.

The controller 291 stops the operation of the film transport driving portion 253 in accordance with the timing at which the rear end of the instant film 10 passes through the developing roller pair 252. The instant film 10 is held in a state in which a part of the instant film 10 is discharged from the print outlet 212.

### Effects of Printer and Cartridge

According to the printer 200 of the present embodiment configured as described above, by adopting a configuration in which the encoder 271 that detects the rotation amount of the capstan roller 251A is disposed inside the third gear 253B3 (capstan roller side) in the rotation amount detection section 270, the size (narrowing of width) of the housing 210 in the width direction (x-axis direction) can be reduced.

In addition, by adopting a configuration in which the instant films 10 disposed in a stacked manner are pressed from the exposure surface 10a side, the exposure section 280 can be disposed by effectively utilizing the space formed in the housing 210. As a result, the size (thinning) of the housing 210 in the thickness direction (front-rear direction; z-axis direction) can be reduced.

On the other hand, in a case where a configuration in which the instant film 10 is pressed from the exposure surface 10a side is adopted, the openings (pressing openings 130A and 130B) are disposed on the exposure surface 10a side of the cartridge 100. Therefore, in a case where the cartridge 100 is handled in an environment that is not a darkroom, the cartridge 100 is easily exposed (the cartridge 100 is more easily exposed than in a configuration in which the opening is provided on the observation surface 10b side).

However, in the cartridge 100 of the present embodiment, the exposure surface 10a of the instant film 10 in the cartridge 100 is covered with the light shielding plate 140 having a hole-free shape. Therefore, the exposure can be effectively suppressed.

Further, since the light shielding plate 140 is provided with the light shielding protrusions 143A and 143B that are fitted to the pressing openings 130A and 130, the light can be further effectively prevented from leaking from the pressing openings 130A and 130.

### Modification Examples

### [1] Modification Examples of Printer

### Film Pressing Portion

### (1) Setting of Pressing Force

In the above-described embodiment, a configuration in which the instant film 10 in the cartridge 100 loaded in the cartridge loading chamber 221 is pressed at two locations is adopted. However, the configuration in which the instant film 10 is pressed is not limited thereto. A configuration in which the instant film 10 can be pressed at at least one location may be adopted. However, in order to realize more stable transport (feeding), it is preferable to press the instant film 10 at a plurality of locations. In addition, it is preferable to dispose the pressing portion along the transport direction (feeding direction) of the instant film 10.

In a case where a configuration in which the instant film 10 is pressed at a plurality of locations is adopted, the individual pressing forces may be set to different values. For example, in the printer 200 of the above-described embodiment, the pressing force (first pressing force) of the first pressing unit 230A (first pressing portion) and the pressing force (second pressing force) of the second pressing unit 230B (second pressing portion) may be set to different values. In this case, it is preferable to set the pressing force of the pressing unit (pressing portion) on the upstream side in the transport direction of the instant film 10 to be smaller than the pressing force of the pressing unit (pressing portion) on the downstream side. That is, it is preferable to set the pressing force to be larger as the pressing unit (pressing portion) is closer to the film discharge port 120. Therefore, for example, in the printer 200 of the above-described embodiment, it is preferable to set the pressing force (second pressing force) of the second pressing unit 230B (second pressing portion) disposed on the upstream side in the transport direction to be smaller than the pressing force (first pressing force) of the first pressing unit 230A (first pressing portion) disposed on the downstream side in the transport direction (first pressing force > second pressing force).

In this way, by increasing the pressing force on the downstream side in the transport direction, that is, on the side close to the film discharge port 120, it is possible to suppress the floating of the instant film 10 discharged from the film discharge port 120, and to realize stable transport of the instant film 10 and recording of a high-quality image. That is, since the instant film 10 is long, stable transport can be realized by pressing the instant film 10 at a plurality of locations. On the other hand, in a case where the pressing force on the upstream side in the transport direction is increased, the floating is likely to occur on the downstream side in the transport direction. That is, the floating is likely to occur in the instant film 10 discharged from the film discharge port 120. The floating of the instant film 10 at the film discharge port 120 affects the exposure and the like. By increasing the pressing force on the downstream side in the transport direction, it is possible to suppress the floating of the instant film 10 discharged from the film discharge port 120, and to realize recording of a high-quality image.

The pressing force is adjusted, for example, by adjusting the spring constant of the spring 233 that biases the pressing lever 232 in each of the pressing units 230A and 230B.

### (2) Configuration in which Pressing Portion is Provided on Cartridge Side

In the above-described embodiment, the configuration is adopted in which the mechanism (pressing portion) that presses the instant film 10 is provided in the printer 200, but the configuration may be adopted in which the mechanism (pressing portion) is provided in the cartridge 100. For example, in the cartridge 100 of the above-described embodiment, a configuration can be adopted in which a biasing member such as a spring in the case 110 is disposed and the light shielding plate 140 is biased by the biasing member. In addition, a configuration may be adopted in which the first light shielding plate 141 is provided with spring properties (for example, configured as a plate spring) and the first light shielding plate 141 presses the instant film 10 in the stacking direction.

In a case where the pressing mechanism is provided on the cartridge 100 side as described above, the pressing mechanism on the printer 200 side is not necessary. In addition, the cartridge 100 also does not require the pressing opening.

### Exposure Section

The exposure section 280 of the above-described embodiment has a configuration (so-called linear optical system) in which the light source part 282 constituting the exposure head 281 is disposed to face the exposure surface 10a of the instant film 10 and the optical axis of the optical system 283 is orthogonal to the exposure surface 10a of the instant film 10, but the configuration of the exposure section 280 is not limited thereto. For example, a configuration (so-called bending optical system) in which light emitted from the light source part 282 is bent and focused on the exposure surface 10a may be adopted. In this case, for example, the optical axis is bent by using a reflective optical element (for example, a mirror) in a part of the optical system.

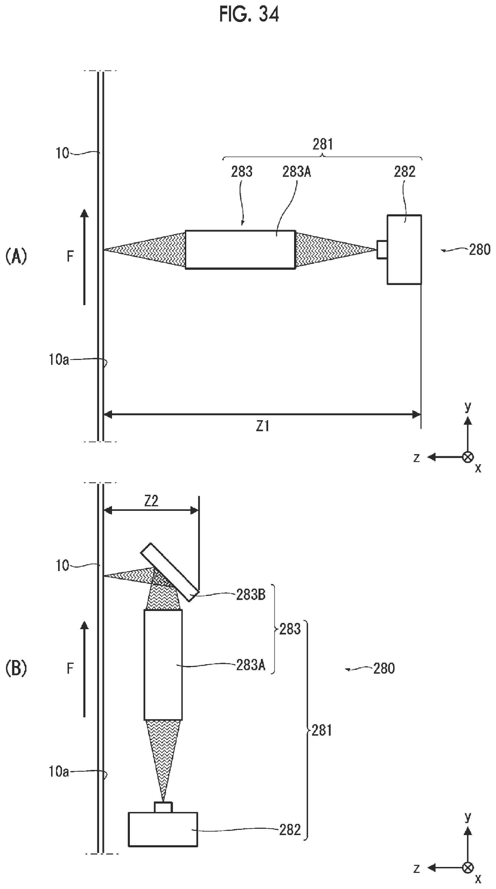

FIGS. 34A and 34B are diagrams showing a comparison between an exposure section adopting a linear optical system and an exposure section adopting a bending optical system. In FIG. 34A shows a configuration of the exposure section 280 adopting a linear optical system (the exposure section 280 adopted in the printer 200 of the above-described embodiment). In addition, FIG. 34B shows a configuration of the exposure section 280 adopting a bending optical system.

As shown in FIG. 34B, in the exposure section 280 adopting a bending optical system, the optical system 283 includes a focusing lens array 283A and a mirror 283B, and the mirror 283B bends light from the light source part 282. The light source part 282 emits light along the transport direction of the instant film 10. That is, light is emitted parallel to the exposure surface 10a. The optical axis of the focusing lens array (for example, SLA) 283A is also disposed along the transport direction of the instant film 10. Therefore, the optical axis of the focusing lens array 283A is also disposed parallel to the exposure surface 10a. The mirror 283B reflects the light that has passed through the focusing lens array 283A toward the exposure surface 10a of the instant film 10. In the present example, the light is reflected in a direction orthogonal to the optical axis of the focusing lens array 283A.

As shown in FIGS. 34A and 34B, by adopting the bending optical system, a space in the housing front-rear direction (z-axis direction) required for the incorporation of the exposure section 280 can be reduced. That is, as shown in FIG. 34A, in the exposure section 280 of the linear optical system, a space having a width (thickness) Z1 in the front-rear direction of the housing (direction orthogonal to the exposure surface 10a of the instant film 10) is required in a case of being incorporated into the housing. On the other hand, in the exposure section 280 of the bending optical system, as shown in FIG. 34B, the exposure section 280 can be incorporated in a space having a width Z2 (Z2 < Z1) narrower than the width Z1. As a result, the size of the housing 210 in the thickness direction (front-rear direction; z-axis direction) can be reduced. That is, the housing 210 can be thinned.

### Rotation Amount Detection Section

In the above-described embodiment, the rotation amount detection section 270 is configured to detect the rotation amount of the capstan roller 251A, but a configuration may be adopted in which the rotation amount of another roller, for example, the first developing roller 252A or the second developing roller 252B is detected. Therefore, for example, a configuration may be adopted in which the code wheel 272 is attached to a gear other than the third gear 253B3 and the rotation amount thereof is detected.

However, in order to detect the speed of the instant film 10 with higher accuracy, it is preferable to adopt a configuration in which the rotation amount of the capstan roller 251A is detected. The capstan roller 251A rotates substantially without slipping with respect to the instant film 10. Therefore, by detecting the rotation amount of the capstan roller 251A, the speed of the instant film 10 can be detected with high accuracy.

In addition, in the above-described embodiment, the code wheel 272 is attached to the gear (third gear 253B3), but a configuration may be adopted in which the code wheel 272 is attached to a shaft portion of the roller. For example, a configuration may be adopted in which the code wheel 272 is attached to a shaft portion between gears.

On the other hand, by adopting a configuration in which the code wheel 272 is attached to the gear, the code wheel 272 can be stably held, and the width narrowing can be performed. In particular, as in the above-described embodiment, the width narrowing can be realized by providing a recess in a side surface of the gear and disposing the code wheel 272 in the recess. At the same time, a decrease in detection accuracy due to dust or the like generated from the gear can also be suppressed.

In addition, in the above-described embodiment, the disk-shaped scale is adopted as the code wheel, but the shape of the scale in the encoder is not limited thereto, and can be appropriately deformed according to the shape of the member to be attached.

### [2] Modification Examples of Cartridge

### Film Discharge Port

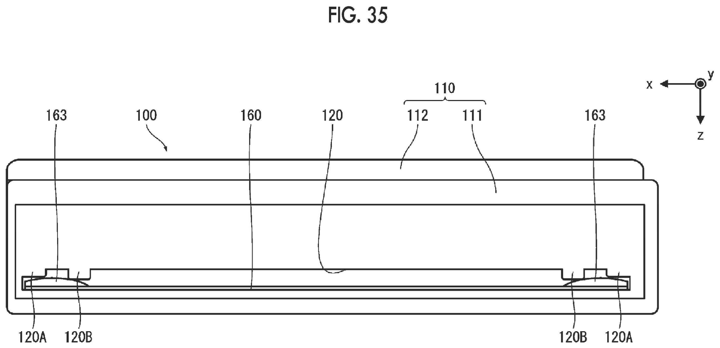

FIG. 35 is a view showing another example of the film discharge port provided in the cartridge. FIG. 35 corresponds to a top view of the cartridge. Note that the flap, the stopper film, and the instant films are not shown for explanatory convenience.

As shown in FIG. 35, the film discharge port 120 according to the present example has projecting portions. In the example shown in FIG. 35, the film discharge port 120 has a first projecting portion 120A and a second projecting portion 120B which are rectangle-shaped at each end portion in a longitudinal direction of the film discharge port 120.

The first projecting portions 120A and the second projecting portions 120B regulate the width of the film discharge port 120 (a width in a direction orthogonal to the longitudinal direction of the film discharge port 120) to restrain the instant film 10 from being discharged together. Specifically, the first projecting portions 120A and the second projecting portions 120B regulate the width of the film discharge port 120 so as to enable only one instant film 10 to pass through. Therefore, the heights (protrusion amounts) of the first projecting portions 120A and the second projecting portions 120B are set such that the width regulated by the first projecting portions 120A and the second projecting portions 120B is smaller than the thickness of two instant films.

The first projecting portion 120A and the second projecting portion 120B are disposed at the position of each dimple 163 in relation to the cover sheet 160. More specifically, the first projecting portion 120A and the second projecting portion 120B are disposed such that the top of the dimple 163 is sandwiched between the first projecting portion 120A and the second projecting portion 120B. In other words, the first projecting portion 120A and the second projecting portion 120B are disposed such that the top of the dimple 163 is located between the first projecting portion 120A and the second projecting portion 120B.

The cover sheet 160 is preferably set such that the thickness of each dimple 163 is slightly larger than the width regulated by the first projecting portions 120A and the second projecting portions 120B. More specifically, the cover sheet 160 is preferably set such that the thickest portion of each dimple 163 (the top of the dimple 163) is disposed between the first projecting portion 120A and the second projecting portion 120B and such that the thickness thereof is slightly larger than the width regulated by the first projecting portions 120A and the second projecting portions 120B. In this case, when the cover sheet 160 is discharged, the dimple 163 passes between the first projecting portion 120A and the second projecting portion 120B while being crushed. This enables the instant film 10 to be restrained from being discharged together when the cover sheet 160 is discharged.

Note that although rectangular shapes are adopted as the shapes of the projecting portions (the first projecting portions 120A and the second projecting portions 120B) provided at the film discharge port 120 in the example shown in FIG. 35, the shapes of the projecting portions are not limited to these. Any shapes may be adopted as long as the shapes regulate the width of the film discharge port 120 and restrain the instant film 10 from being discharged together. Therefore, for example, triangular shapes can be adopted.

### Cover Sheet

As described above, the cover sheet 160 is disposed to be superimposed on the observation surface 10b of the leading instant film 10, and has a function of shielding the claw opening 150 from light from the inside of the case 110. Since the cover sheet 160 is a member provided for the purpose of light shielding, the cover sheet 160 is discharged after the cartridge 100 is loaded into the printer 200.

To smoothly discharge the cover sheet 160, the cover sheet 160 needs to be correctly disposed in the case 110. That is, the cover sheet 160 needs to be disposed at a predetermined position without being shifted.

The cover sheet 160 is preferably disposed with the distal end engaged with the film discharge port 120 to suppress occurrence of a shift in the case 110. Specifically, the cover sheet 160 is disposed (held) in the case 110 such that a part of the distal end portion enters into the film discharge port 120.

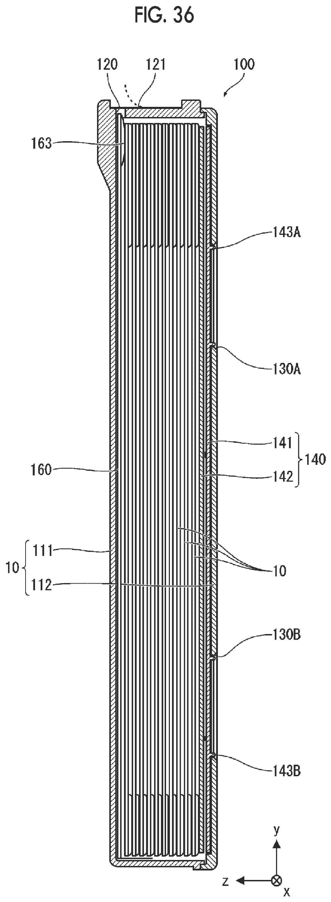

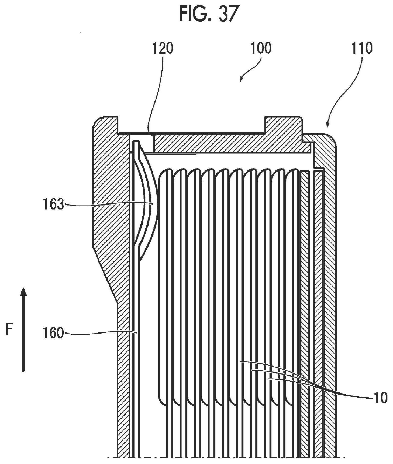

FIG. 36 is a view showing an example of a form of disposition of the cover sheet. FIG. 37 is an enlarged view of a main part in FIG. 36.

In a case where the cover sheet 160 is accommodated in the case 110, as shown in FIGS. 36 and 37, the cover sheet 160 is disposed such that a part of the distal end of the cover sheet 160 enters into the film discharge port 120. Since a part of the distal end of the cover sheet 160 enters into the film discharge port 120, the configuration configuration ensures that the cover sheet 160 is unlikely to be displaced even when subjected to vibration, shock, and the like. The configuration also enables easy assembly. That is, attachment of the cover sheet 160 that causes the distal end to enter into the film discharge port 120 at the time of assembly facilitates positioning and enables easier assembly.

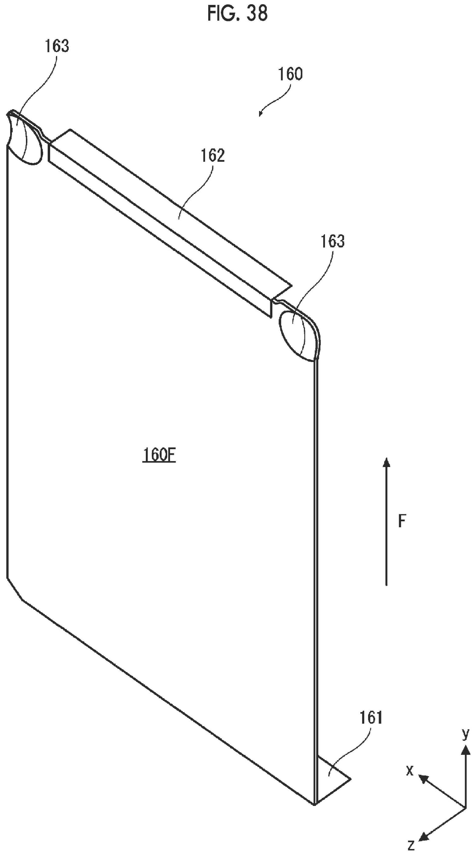

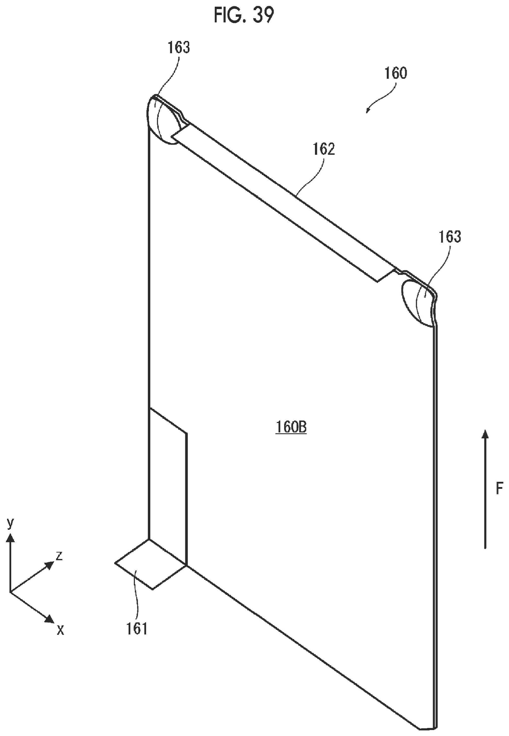

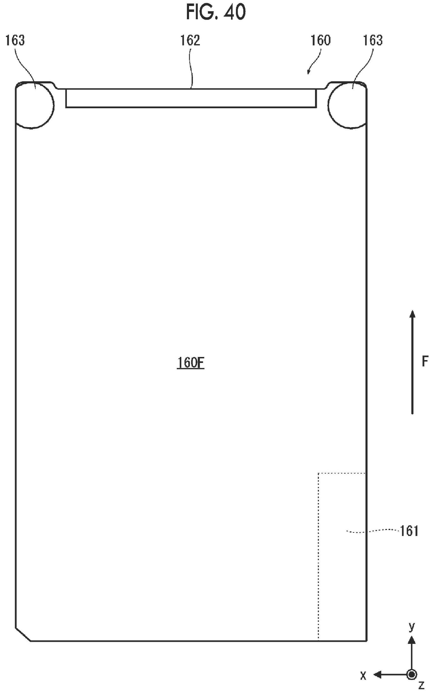

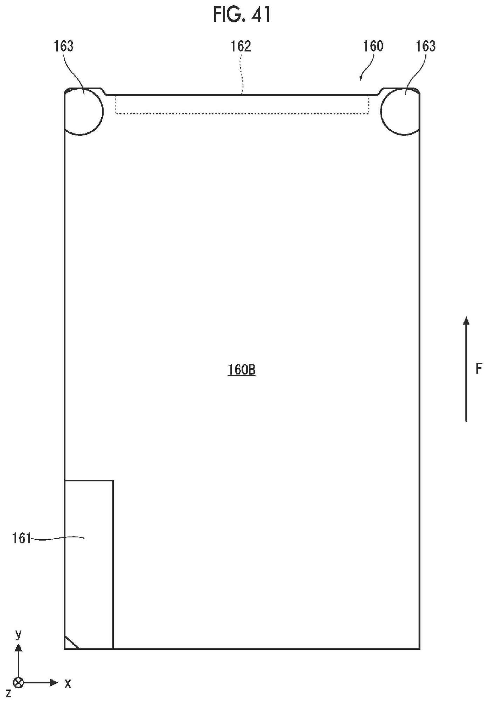

FIG. 38 is a front perspective view showing a preferred example of the cover sheet, and FIG. 39 is a rear perspective view showing the preferred example of the cover sheet. FIG. 40 is a front view showing the preferred example of the cover sheet, and FIG. 41 is a rear view showing the preferred example of the cover sheet.

The cover sheet 160 is preferably configured so as to partially protrude at the dimples 163. That is, the cover sheet 160 is preferably configured such that the dimples 163 enter partially into the film discharge port 120.

As described above, the film discharge port 120 is provided with projecting portions (the first projecting portion 120A and the second projecting portion 120B) corresponding in position to each dimple 163. The dimples 163 are made to protrude to enter into the film discharge port 120, thereby effectively restraining a positional shift. That is, the configuration in which the dimple 163 enters into a portion where the width of the film discharge port 120 is smallest enables enhancement of the action of restraining the cover sheet 160 and effective restraint of a positional shift.

The partial protrusion at the dimples 163 enables disposition of the stopper film 162 at an appropriate position. A portion to which the stopper film 162 is attached is retracted rearward from the dimples 163 and is a concave portion.

In the cover sheet 160, an edge portion (at least an edge portion on the front side in the transport direction) is preferably subjected to chamfering. That is, it is preferable to remove a sharp edge, and shape the edge portion such that the edge portion has an inclined surface or an arc-shaped surface.

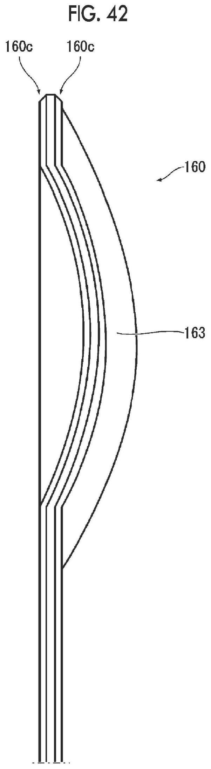

FIG. 42 is a view showing an example of the cover sheet having chamfered edge portions.

FIG. 42 shows an example where edge portions 160c are subjected to 45-degree chamfering and each intersection portion is composed of an inclined surface. The chamfering of the edge portions 160c enables smooth discharge from the printer. That is, the chamfering enables easy passage between the developing roller pair 252 and smooth discharge (suppression of occurrence of a jam or the like).

As the chamfering, rounding or the like may be adopted in addition to 45-degree chamfering.

### Structure of Case

As described above, the case main body 111 and the cover 112 are preferably provided with the protrusions 113 and the recesses 114 that fit together only in a case where the case main body 111 and the cover 112 are correctly assembled (see FIGS. 9 and 10). This prevents misassembly.

It suffices that the relationship between the protrusions 113 and the recesses 114 be such that the protrusions 113 are provided at either one of the case main body 111 and the cover 112 and the recesses 114 are provided at the other.

For reduction in the size of the case 110, the protrusions 113 provided at the case 110 are preferably thin. Reduction in the thickness of the protrusion 113, however, reduces the strength to make the protrusion 113 likely to be broken by shock and the like. In a case where the cover 112 and the case main body 111 are welded by ultrasonic welding, the protrusion 113 may break due to vibration at the time of the welding.

Therefore, it is preferable to adopt, for the protrusion 113, a shape that resists breakage even in a case where the protrusion 113 is thinned.

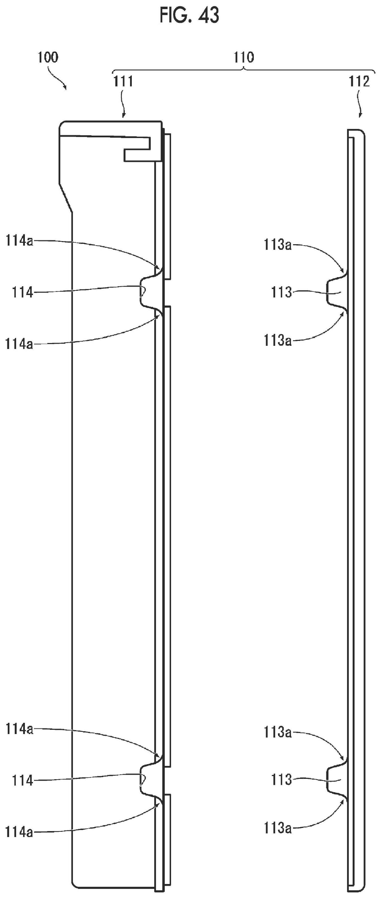

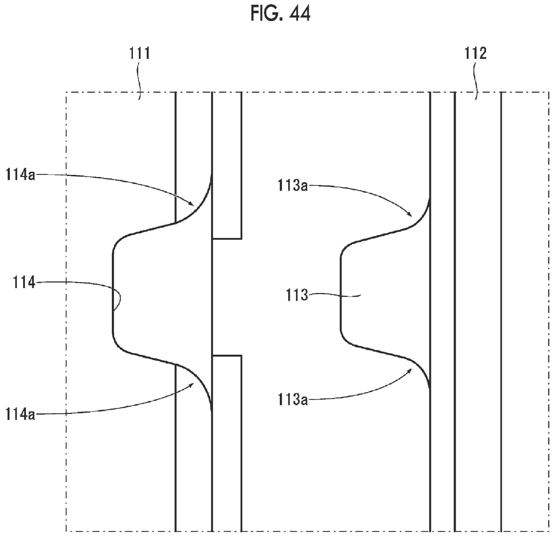

FIG. 43 is a view showing other examples of the protrusions and the recesses provided at the case main body and the cover. FIG. 44 is an enlarged view of parts (the protrusion and the recess) of FIG. 43.

As shown in FIGS. 43 and 44, the protrusion 113 in the present example has arc portions 113a (so-called fillets) at a base end portion. That is, the protrusion 113 has the arc portions 113a at the base of a trapezoid (a boundary portion between the protrusion 113 and the cover 112).

Since the base end portion of the protrusion 113 is formed to have arc shapes, concentration of stress on the base end portion can be reduced, and the strength of the protrusion 113 can be enhanced (the rigidity can be increased).

Note that, in this case, the entrance of the recess 114 is also provided with arc portions 114a corresponding in shape to the protrusion 113.

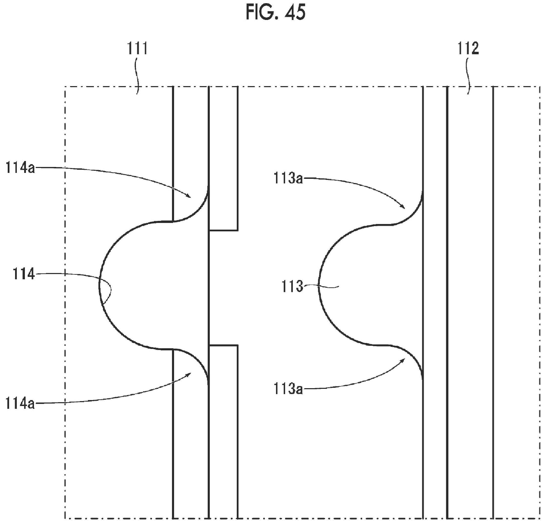

FIG. 45 is a view showing another example of the shape of the protrusion.

FIG. 45 shows an example of a case where the protrusion 113 has an arc shape. In this case as well, the strength of the protrusion 113 may be enhanced by providing the base end portion of the protrusion 113 with the arc portions 113a.

Since the base end portion of the protrusion 113 is formed to have arc shapes, it is possible to thin the protrusion 113 while ensuring strength. This enables reduction in the size of the cartridge 100.

Note that although an arc shape is adopted as the shape of the base end portion of the protrusion 113 in the present example, a shape inversely tapered toward the base end portion may be adopted. Note that an arc shape is preferable from the standpoint of reducing stress concentration.

In ultrasonic welding, the relationship between the frequency of ultrasonic vibration transmitted from a horn to an object to be welded and the natural frequency of the object to be welded affects welding quality. Generally, when the frequency of ultrasonic vibration becomes equal or close to the natural frequency of the object to be welded, a resonance phenomenon may occur to make vibration amplitude excessive. As a result, stress may concentrate unnecessarily on a part other than a welded portion to invite deformation, crack, whitening, or breakage. Therefore, to weld the cover 112 and the case main body 111 by ultrasonic welding, it is desirable to sufficiently separate the natural frequency of the protrusion 113 from the drive frequency of ultrasonic welding. This enables restraint of breakage of the protrusion 113 due to resonance.

To sufficiently separate the natural frequency of the protrusion 113 from the drive frequency of ultrasonic welding, it is preferable to adjust the shape or the mass distribution of the protrusion 113 by providing the base end portion of the protrusion 113 with the arc portions 113a or adjusting the thickness, as described above.

### Processing of Inner Surface of Case

As described above, the cartridge 100 loaded into the printer 200 is used in a state where the instant film 10 in the case 110 is pressed in the stacking direction. The pressing of the instant films 10 is performed by the film pressing portion 230 of the printer 200. Since the instant films 10 in the case 110 are pressed by the film pressing portion 230, the leading instant film 10 is pushed against the inner surface on the front surface side of the case 110. This causes the leading instant film 10 to be always positioned and disposed at a predetermined position (a position facing the film discharge port 120) in the case 110.

However, in a case where the instant film 10 is pressed, the observation surface 10b of the instant film 10 may be rubbed against the inner surface of the case 110 to cause a flaw at the time of discharge.

It is thus preferable that the case 110 have a structure (low-friction structure) which reduces a coefficient of friction with the instant film 10. The structure restrains abrasion on the observation surface 10b of the instant film 10 at the time of discharge.

It suffices that the friction reducing structure be provided at least at a surface on which the observation surface 10b of the instant film 10 slides at the time of discharge of the instant film 10. In the case 110 according to the embodiment, the friction reducing structure only needs to be provided at the inner surface on the front surface side of the case main body 111.

A specific configuration of the friction reducing structure is not particularly limited. Any structure may be adopted as long as the structure can reduce the coefficient of friction with the instant film 10 as much as possible. As an example, an aspect is adopted in which the surface on which the observation surface 10b of the instant film 10 slides has a smooth surface. In the case 110 according to the embodiment, the inner surface on the front surface side of the case main body 111 has a smooth surface. For example, in a case where the case 110 is molded of resin, a smooth surface is obtained by polishing a surface of a molding die. In the case 110 according to the embodiment, a smooth surface is obtained by polishing (mirror-finishing, for example) a surface of the die by which the inner surface on the front surface side of the case main body 111 is molded.

Note that, in a case where every inner surface of the case main body 111 is composed of a smooth surface, when light enters through the claw opening 150, the light is likely to leak into the case by internal reflection (specular reflection). For this reason, in smoothing the inner surfaces of the case main body 111, it is preferable to smooth the inner surfaces except around the claw opening 150. This enables restraint of internal reflection of light entering through the claw opening 150.

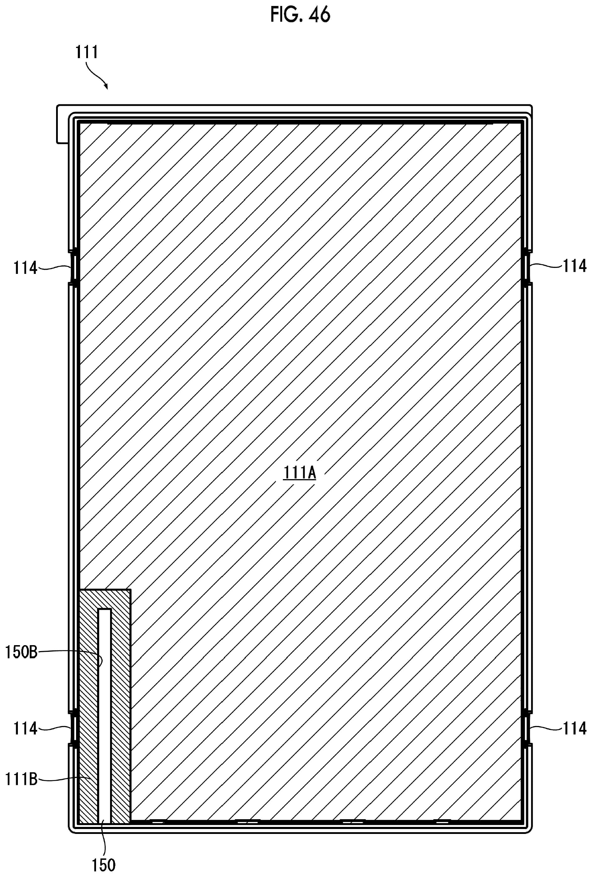

FIG. 46 is a view showing an example of smoothing to be performed on an inner surface of the case main body. FIG. 46 corresponds to a rear view of the case main body 111.

In FIG. 46, a region 111A indicated by coarse hatching is a region composed of a smooth surface while a region 111B indicated by close hatching is a region composed of a non-smooth surface. A region except around the claw opening 150 at the inner surface on the front surface side of the case main body 111 has a smooth surface. This enables restraint of internal reflection of light entering through the claw opening 150.

Note that the region 111B with the non-smooth surface (rough-surfaced structure) around the claw opening 150 is provided for the purpose of restraining internal reflection. The surface roughness thereof is set at a value which enables reduction in internal reflection.

The region 111B around the claw opening 150 may be subjected to matte black treatment, flocking, processing that provides microasperities, or low-reflectivity coating instead to restrain internal reflection.

To provide the friction reducing structure, for example, the process of forming an inner surface of the case main body 111 from a low-friction material or the process of providing a low-friction layer at an inner surface can also be adopted, in addition to construction from a smooth surface. For example, friction may be reduced by providing a silicone-based or fluorinated lubricating coating layer at an inner surface.

### Other Embodiments

### Applicable Device

In the above-described embodiment, a case where the present invention is applied to a printer has been described as an example, but the application of the present invention is not limited thereto. For example, the present invention can also be applied to a camera incorporating a printer (so-called printer-equipped camera). The printer-equipped camera is a camera comprising an imaging unit and a printer as an exposure device in one housing. The imaging unit has a configuration as a digital camera.

In addition, the present invention can also be applied to a device having a function other than a printer.

### Recording Medium

In the above-described embodiment, a case where the present invention is applied to an exposure device (printer) using an instant film as a recording medium has been described as an example, but the application of the present invention is not limited thereto. The present invention can be applied to any device that uses a sheet-like recording medium having an exposure surface on one side and records an image by exposure (irradiation with light).

In addition, in the above-described embodiment, the instant film has a so-called vertically long shape, but the shape of the instant film is not limited thereto, and various shapes (aspect ratios) can be adopted.

### Supplementary Notes

In regard with the above-described embodiment, the following supplementary notes are further disclosed.
[1] A cartridge in which sheet-like recording media are accommodated in a case in a stacked manner, the recording media being discharged one by one from a slit-shaped discharge port provided in the case, the cartridge comprising
   a cover sheet that is disposed to be superimposed on a leading one of the recording media and is discharged from the discharge port,
   wherein the cover sheet is disposed in the case, a distal end portion of the cover sheet engaging with the discharge port.
[2] The cartridge according to [1],
   wherein a distal end of the cover sheet is disposed in the case, in such a manner that a part of the distal end is inserted into the discharge port.
[3] The cartridge according to [1] or [2],
   wherein the cover sheet has a protrusion at a distal end of a surface facing the recording media.
[4] The cartridge according to [3],
   wherein the cover sheet is disposed in the case while a part of the protrusion is inserted into the discharge port.
[5] A cartridge in which sheet-like recording media are accommodated in a case in a stacked manner, the recording media being discharged one by one from a slit-shaped discharge port provided in the case,
   wherein the case includes a case main body and a cover,
   the case main body and the cover have a protrusion and a recess that fit together only in a case where the case main body and the cover are correctly assembled, and
   a base end portion of the protrusion and a base end portion of the recess each have an arc portion.
[6] A cartridge in which sheet-like recording media are accommodated in a case in a stacked manner, the recording media being discharged one by one from a slit-shaped discharge port provided in the case,
   wherein the case has, at least on a surface on which the recording media slide, a structure that reduces a coefficient of friction with the recording media.
[7] The cartridge according to [6],
   wherein the surface has a smooth surface in the case.
[8] The cartridge according to [6] or [7],
   wherein the case has a claw opening into which a claw that discharges the recording media is to be inserted, and
   has, except around the claw opening, the structure that reduces the coefficient of friction with the recording media.

### Others

In the present specification, meanings of the terms "the same" and "identical" include not only a meaning of "perfectly identical" but also a meaning of "substantially the same" including an error allowed in design and manufacturing.

In addition, in the present specification, a meaning of the term "coaxial" includes not only a meaning of "perfectly coaxial" but also a meaning of "substantially coaxial" including an error allowed in design and manufacturing.

In addition, in the present specification, a meaning of the term "orthogonal" includes not only a meaning of "perfectly orthogonal" but also a meaning of "substantially orthogonal" including an error allowed in design and manufacturing.

In addition, in the present specification, a meaning of the term "parallel" includes not only a meaning of "perfectly parallel" but also a meaning of "substantially parallel" including an error allowed in design and manufacturing.

In addition, in the present specification, a meaning of the term "synchronized" includes not only a meaning of "completely synchronized" but also a meaning of "practically synchronized" (a meaning of "substantially synchronized").

In addition, in the present specification, a meaning of the term "simultaneous" includes not only a meaning of "completely simultaneous" but also a meaning of "practically simultaneous" (a meaning of "substantially simultaneous").

In addition, in the present specification, the meaning of the term "constant" includes not only the meaning of "completely constant" but also a range recognized as substantially constant (the meaning of "substantially constant").

In addition, the above-described embodiment is for illustrating the technique according to the present disclosure, and therefore various modifications, replacements, additions, omissions, and the like can be made within the scope of the claims or the equivalent thereof.

### Explanation of References

10: instant film
10a: exposure surface
10b: observation surface
12: exposure region
13: side edge portion
14: pod portion
14a: development treatment liquid pod
16: trap portion
16a: absorbent material
18: observation region
18a: frame
100: cartridge
110: case
111: case main body
111A: region with smooth surface
111B: region with non-smooth surface
112: cover
112a: light shielding plate bonding portion
113: protrusion of cover
113a: arc portion of protrusion
114: recess of cover main body
114a: arc portion of recess
120: film discharge port
120A: first projecting portion of film discharge port
120B: second projecting portion of film discharge port
121: flap
130: pressing opening
130A: pressing opening (first pressing opening)
130B: pressing opening (second pressing opening)
140: light shielding plate
140a: bonding part with cover
141: first light shielding plate
141a: slit of first light shielding plate
142: second light shielding plate
142a: bonding portion of second light shielding plate with first light shielding plate
143A: light shielding protrusion
143B: light shielding protrusion
144: engagement avoidance portion
144A: recess
144B: notch portion
150: claw opening
150A: claw bottom surface opening
150B: claw front surface opening
160: cover sheet
160B: rear surface of cover sheet
160F: front surface of cover sheet
160c: edge portion of cover sheet
161: skirt member
162: stopper film
200: printer
210: housing
212: print outlet
213: film door
214: film door lock
220: cartridge loading portion
221: cartridge loading chamber
222: cartridge loading detection section
223: film door opening/closing detection section
230: film pressing portion
230A: pressing unit (first pressing unit)
230B: pressing unit (second pressing unit)
231: main body frame
232: pressing lever
232a: shaft of pressing lever
233: spring
234: screw
240: film feeding section
241: claw
250: film transport section
251: transport roller pair
251A: capstan roller
251A1: abutting part of capstan roller
251A2: shaft
251B: pinch roller
252: developing roller pair
252A: first developing roller
252B: second developing roller
253: film transport driving portion
253A: motor
253B: gear mechanism
253B1: first gear
253B2: second gear
253B3: third gear
253B3a: recess in side surface of third gear
253B4: fourth gear
253B5: fifth gear
253B6: sixth gear
260: film distal end detection section
261: detection switch
261A: detection lever
270: rotation amount detection section
271: encoder
272: code wheel
272A: reflective portion
272B: non-reflective portion
273: sensor module
273A: light projecting part
273B: light receiving part
280: exposure section
281: exposure head
282: light source part
283: optical system
283A: focusing lens array
283B: mirror
291: controller
291A: processor
291B: memory
292: operation section
293: wireless communication section
294: sound output section
295: power supply controller
CL: claw
CL1: engaging portion of claw
F: advance direction of instant film
PA: pressing member
PB: pressing member

## Claims

1. An exposure device comprising:
an accommodation portion in which sheet-like recording media each having an exposure surface on one side are accommodated in a stacked manner with orientations of the exposure surfaces aligned;
a pressing portion that presses the recording media accommodated in the accommodation portion in a stacking direction from an exposure surface side;
a feeding section that feeds the recording medium positioned at a leading end in a pressing direction of the pressing portion from the accommodation portion;
a transport section that transports the recording medium fed from the accommodation portion; and
an exposure section that is provided between the accommodation portion and the transport section and exposes the exposure surface of the recording medium fed from the accommodation portion by irradiating the exposure surface with light.

2. The exposure device according to claim 1,
wherein the pressing portion includes a first pressing portion and a second pressing portion in order from a downstream side toward an upstream side in a feeding direction of the recording media,
the first pressing portion presses the recording media with a first pressing force, and
the second pressing portion presses the recording media with a second pressing force different from the first pressing force.

3. The exposure device according to claim 2,
wherein the second pressing portion presses the recording media with the second pressing force smaller than the first pressing force.

4. The exposure device according to any one of claims 1 to 3,
wherein the recording media are accommodated in a cartridge, and the cartridge is accommodated in the accommodation portion.

5. The exposure device according to claim 4,
wherein the cartridge includes
a case that accommodates the recording media and has a first opening on a surface facing the exposure surface of the recording media, and
a sheet-like light shielding member that is provided in the case, covers the first opening from an inside of the case, and has a protrusion to be inserted into the first opening, and
the pressing portion includes a pressing member that is inserted into the first opening of the cartridge accommodated in the accommodation portion and presses the light shielding member.

6. The exposure device according to claim 5,
wherein the light shielding member includes
a sheet-like first light shielding member that is elastically deformable, a part of the first light shielding member being bonded to the cartridge, and the first light shielding member being disposed in the case to cover the first opening, and
a sheet-like second light shielding member, a part of the second light shielding member being bonded to the first light shielding member, and the second light shielding member being disposed to overlap the first light shielding member to support the recording media.

7. The exposure device according to claim 5 or 6,
wherein the feeding section includes an engaging member that moves in a feeding direction of the recording media, engages the engaging member with the recording medium at the leading end in the feeding direction, and feeds the recording medium from the accommodation portion,
the cartridge has a second opening into which the engaging member is inserted, in the case, and
the light shielding member has a first recess that is recessed in a thickness direction corresponding to a position of the second opening, and engagement with the engaging member is avoided through the first recess.

8. The exposure device according to any one of claims 5 to 7,
wherein the light shielding member has an outer shape corresponding to an internal shape of the case and has a hole-free shape.

9. The exposure device according to any one of claims 1 to 8, further comprising:
a detection section that detects a speed of the recording medium transported by the transport section,
wherein the transport section includes
a roller that rotates to feed the recording medium, and
a gear train that transmits power to the roller, and
the detection section includes
a reflective member provided on one of gears constituting the gear train,
a light projecting part that projects light onto the reflective member, and
a light receiving part that receives the light projected from the light projecting part and reflected by the reflective member.

10. The exposure device according to claim 9,
wherein the reflective member is provided on the gear mounted on a shaft of the roller, and
preferably, wherein the reflective member is provided on a side surface of the gear on a roller side, and
more preferably, the gear has a second recess in the side surface, and the reflective member is disposed in the second recess.

11. The exposure device according to any one of claims 1 to 10,
wherein the exposure section includes
a light source part disposed to face the exposure surface of the recording medium fed from the accommodation portion, and
an optical system that focuses light emitted from the light source part on the exposure surface.

12. The exposure device according to any one of claims 1 to 10,
wherein the exposure section includes
a light source part, and
an optical system that includes a reflective optical element and bends light emitted from the light source part to focus the light on the exposure surface.

13. A cartridge in which sheet-like recording media each having an exposure surface on one side are accommodated in a stacked manner with orientations of the exposure surfaces aligned, the cartridge comprising:
a case that accommodates the recording media and has a first opening on a surface facing the exposure surface of the recording media; and
a sheet-like light shielding member that is provided in the case, covers the first opening from an inside of the case, and has a protrusion to be inserted into the first opening,
wherein the recording media in the case are pressable from an exposure surface side in a stacking direction through the light shielding member from the first opening.

14. The cartridge according to claim 13,
wherein the light shielding member includes
a sheet-like first light shielding member that is elastically deformable, a part of the first light shielding member being bonded to the cartridge, and the first light shielding member being disposed in the case to cover the first opening, and
a sheet-like second light shielding member, a part of the second light shielding member being bonded to the first light shielding member, and the second light shielding member being disposed to overlap the first light shielding member to support the recording media,
and/or,
wherein the recording medium in the case is discharged from the case by engaging an engaging member that moves in a discharge direction with the recording medium,
the case has a second opening into which the engaging member is inserted, and
the light shielding member has a first recess recessed in a thickness direction corresponding to a position of the second opening, and engagement with the engaging member is avoided through the first recess.

15. The cartridge according to claim 13 or 14,
wherein the recording medium in the case is discharged from the case by engaging an engaging member that moves in a discharge direction with the recording medium,
the case has a second opening into which the engaging member is inserted, and
the light shielding member has a first recess recessed in a thickness direction corresponding to a position of the second opening, and engagement with the engaging member is avoided through the first recess.
